(19)

Europäisches
Patentamt
European
Patent Office
Office européen
des brevets

(11) **EP 4 390 326 A1**

(12) **EUROPEAN PATENT APPLICATION**

(43) Date of publication:
**26.06.2024 Bulletin 2024/26**

(21) Application number: **22275165.3**

(22) Date of filing: **20.12.2022**

(51) International Patent Classification (IPC):
**G01D 5/34** *(2006.01)*      **G01D 5/38** *(2006.01)*

(52) Cooperative Patent Classification (CPC):
**G01D 5/38; G01D 5/345**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Renishaw PLC
Wotton-under-Edge, Gloucestershire GL12 8JR
(GB)**

(72) Inventor: **The designation of the inventor has not
yet been filed**

(74) Representative: **Rolfe, Edward William et al
Patent Department
Renishaw plc
New Mills
Wotton-under-Edge
Gloucestershire GL12 8JR (GB)**

(54) **ENCODER APPARATUS**

(57)    A position measurement encoder apparatus,
comprising: a scale comprising a series of features which
are readable by a readhead so as to determine a relative
position of the scale and the readhead, and which diffract
light into multiple diffraction orders; a readhead comprising a light source for illuminating the scale, a first sensor,
and a second sensor; wherein at least one diffraction
order has an optical state different to that of at least one
other diffraction order, and configured such that, by way
of the optical state of the diffraction orders, a signal
sensed by the first sensor is formed from a diffraction
order composition that is different to that of a signal
sensed by the second sensor

Figure 3

**Description**

This invention relates to a position measurement encoder apparatus.

A position measurement encoder apparatus (hereinafter referred to as an "encoder apparatus" or "position encoder") can be used to determine relative movement of two relatively moveable parts of an apparatus. A position encoder typically comprises a scale and a readhead (one provided on one part of the apparatus and the other on the other part of the apparatus). The scale can comprise a series of features which the readhead can read so as to measure its position along the scale (the scale's features, for example, could be provided on a substrate which is fastened to the part of the apparatus, or could even be formed integrally as part of the apparatus).

A so-called "incremental" position encoder can work, for example, by "counting" its position along the length of the scale, e.g. from its start-up position and/or from a defined reference marker(s) on the scale. As will be understood, the way in which the "counting" of the readhead's position is done can vary from encoder apparatus to encoder apparatus. For example, one way is to generate a resultant field, such as an interference fringe field/pattern ("fringe field"), modulated spots, or image at a detector in the readhead, which changes with relative movement. For example, light from a source within the readhead can hit the scale which diffracts the light into a number of diffraction orders. The diffraction orders interfere/interact/recombine at the detector to produce the resultant field. Optionally, an optical element within the readhead can be provided which redirects/deflects diffraction orders such that they interfere/interact at the detector so as to produce the resultant field. As the scale and readhead move relative to each other, the resultant field changes. The readhead can record and/or report movement and position by monitoring the change of the resultant field (e.g. movement of the interference fringe pattern/fringe field). Such a position encoder is described in US5861953.

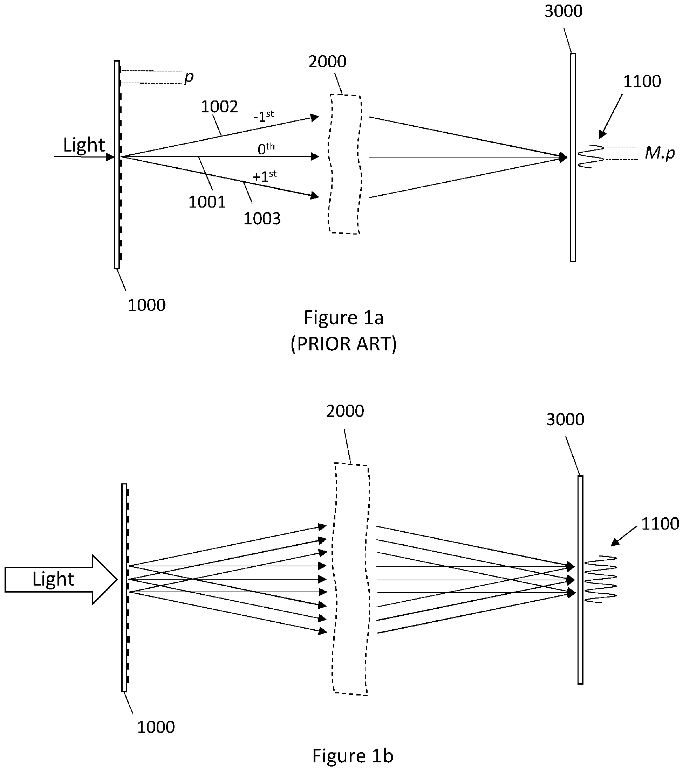

Figure 1a schematically illustrates the optical workings of such a generic prior art incremental position encoder system. The scale 1000 has a periodic series of features having a period "p" and is illuminated by light thereby producing a set of diffraction orders 1001, 1002, 1003. As will be understood, references to light in this document include visible and non-visible light, from the ultraviolet to infra-red ranges. In the particular embodiment described, near infra-red light is used. The diffraction orders 1001, 1002, 1003 are relayed to a sensor 3000 by an optical relay element 2000 (e.g. a lens, prism or a diffraction grating) (the sensor and optical relay element both being located in a readhead which is moveable relative to the scale 1000). The diffraction orders interfere at the sensor 3000, thereby producing an interference fringe pattern/field (schematically illustrated by the wave 1100) at the sensor 3000 having a period equal to $M.p;$ where AT is the magnifying factor of the optical system and p is the scale period. In Figure 1a, the light is shown as being transmitted through the scale, although as will be understood, the light could be reflected from the scale, and so could originate from a light source located on the same side of the scale as the sensor. As will be understood, typically, the source of the light, the relay element 2000 and the sensor 3000 are all provided by/in a readhead device which is configured to move relative to the scale 1000.

Figure 1a is a simplified illustration of the optical situation encountered in an encoder apparatus. In reality, the optical situation shown in Figure 1a is repeated many times over along the length of the scale (i.e. over the area that is illuminated by the source), producing a longer interference fringe field/pattern at the detector (e.g. schematically illustrated in Figure 1b).

For illustrative purposes, only the 0th and +/- 1st orders are shown in Figures 1a and 1b. As will be understood, higher diffraction orders will be produced, and can contribute to the formation of the fringe field at the sensor 3000, although their intensity and therefore contribution to the fringe field are typically much weaker than the 0th and +/- 1st diffraction orders (with higher orders being progressively weaker in intensity).

As will be understood, where the mark-space ratio (i.e. the ratio of the width of the scale features to the spacing between the marks) of the scale is perfectly 1: 1 (as is often the case with amplitude scale for an encoder apparatus), even diffraction orders (e.g. +/- 2nd, +/- 4th diffraction orders) will not be produced, and only odd diffraction orders will be produced (e.g. +/- 3rd, +/-5th diffraction orders). In practice, some minor fabrication errors might mean that the mark-space ratio of the scale is not perfectly 1: 1 and so even diffraction orders might be present (albeit likely having significantly less intensity than adjacent odd diffraction orders). As will be understood, where the mark-space ratio of the scale is deliberately formed such that it is not 1: 1, then significant even diffraction orders can be present.

For the sake of simplicity of illustration, the ray diagrams of Figures 1a and 1b are shown as transmissive ray diagrams (that is the light is shown as being transmitted through each of the scale and optical element), whereas in reality at least one of these could be reflective.

As will be understood, reference marks can be provided, for instance next to and/or embedded within the scale's diffraction features, in order to provide defined reference positions. Such a position encoder is described in US7659992.

So-called "absolute" position encoders are also known which enable the absolute position of the readhead relative to a scale to be determined without the need to count from a predetermined position, such as a reference mark or an end position of the scale. Absolute position encoders typically comprise a scale with unique position data formed on it along the measuring length of the scale. The data can be in the form of, for instance, a pseudorandom sequence or discrete codewords. By reading this data as the scale reader passes over the scale, the scale reader can determine its absolute position. Examples of absolute position encoders are described in US7499827, US10132657 and US2012/0072169. It is known that some absolute encoders use incremental scales alongside absolute scales. It is also known (and for example described in US7499827) that, optionally, the absolute scale retains sufficient periodicity such that the scale can be used as a periodic incremental scale. Either way, such incremental scale can be used, for example, to fine-tune the determined absolute position. Optionally, such a system can be used such that after start-up and the absolute position has been determined, the relative position of the readhead and scale is subsequently measured by "counting" the change in position using the incremental scale. Such an incremental scale can be read in the same way as mentioned above, e.g. by analysing a resultant field produced (at a sensor in the readhead) by the diffraction orders created by the scale.

According to a first aspect of the invention there is provided a position measurement encoder apparatus, comprising: a scale comprising a series of features which are readable by a readhead, the series extending along a measuring dimension; a readhead comprising a light source for illuminating the scale, and first and second sensors for detecting signals produced thereat by one or more diffraction orders produced by the scale's position features which can be used to determine the relative position of the scale and readhead along the measuring dimension; wherein at least one diffraction order has an optical state (or in other words, a different "optical property") different to that of at least one other diffraction order, and configured such that, by way of the optical state (or "optical property") of the diffraction orders, the signal sensed by the first sensor is formed from a diffraction order composition that is different to that of the signal sensed by the second sensor.

An encoder apparatus in accordance with the present invention can provide improved performance over existing encoder apparatus. Whilst it is known (e.g. from DE102015209716, US2003/141441, EP0760932, US9651404) that it can be beneficial in an incremental system to suppress the $0^{th}$ diffraction order coming from the scale, in particular where the scale comprises a relatively fine pitch scale (e.g. less than $20\mu m$, and in particular for scale pitches less than $10\mu m$) the present invention described herein relates to a system which can facilitate the selective suppression of different diffraction orders for different sensors within an encoder readhead. This can be beneficial for both incremental position encoders and absolute position encoders. There is also described herein particularly advantageous arrangements for suppressing the $0^{th}$ order.

In particular, in an encoder apparatus according to the present invention, the signals sensed by the different sensors can be tailored as appropriate to provide an improved/optimised signal for each of the different sensors. For instance, whilst it might be beneficial to suppress the $0^{th}$ diffraction order from contributing to the signal sensed by the first sensor (e.g. which might be an incremental sensor), it might not be beneficial to do so for the second sensor (e.g. which might be a reference mark or absolute sensor). Accordingly, it is not desirable to completely block such diffraction orders from propagating toward the readhead's sensors, and so instead the present invention facilitates selective/bespoke suppression of diffraction orders for the readhead's different sensors, based on their optical state.

The diffraction order composition can vary from one sensor to another in the sense that the extent to which the different diffraction orders contribute to/influence the signal as sensed by the sensors is different for the different sensors. For instance, the signal sensed by the first sensor and the signal sensed by the second could both be formed from the $0^{th}$ and $+/-1^{st}$ diffraction orders, but, due to their optical states, the relative influences of the $0^{th}$ and $+/-1^{st}$ diffraction orders on the formation of signal sensed by the first sensor is different to the relative influences of the $0^{th}$ and $+/-1^{st}$ diffraction orders on the formation of signal sensed by the second sensor. For example, the apparatus could be configured such that the influence of the $0^{th}$ diffraction order on the signal sensed by the first sensor is 50% less than the influence of the $0^{th}$ diffraction order on the signal sensed by the second sensor.

Whilst it is possible to obtain some benefit from only partially attenuating the influence of a particular diffraction order (e.g. the $0^{th}$ diffraction order, or the $+/-1^{st}$ diffraction orders) on the production of signal formed at a sensor, e.g. by attenuating the influence the particular diffraction order on the production of the signal by at least 50% as mentioned above, it is often preferable that the influence a particular diffraction order on the production of the signal sensed by a sensor is substantially fully attenuated, e.g. by at least 90%, for example by at least 95%, for instance by at least 98%. In particularly preferred embodiments, the readhead is configured such that one or more particular diffraction orders (e.g. the $0^{th}$ diffraction order, or the $+/-1^{st}$ diffraction orders) has substantially no influence whatsoever on the production of the signal sensed by one of the first and second sensors, whilst its influence of the production of the signal sensed by the other sensor being left unaffected. Indeed, the invention has been found to provide most benefit when select diffraction orders are substantially completely suppressed for at least one of the sensors, whilst being left substantially unsuppressed for the other sensor.

Accordingly, the apparatus can be configured such that the signals sensed by the first and second sensors can be formed/composed from different subsets of the diffraction orders based on their optical state. For example, in one embodiment, the signal sensed by the first sensor can be formed from one or more diffraction orders other than the $0^{th}$ diffraction order (i.e. the $0^{th}$ diffraction order does not contribute to the signal sensed by the first sensor), whereas the $0^{th}$ diffraction order does contribute to the signal sensed by the second sensor (optionally along with other diffraction orders).

It is often the case in the field of encoder apparatus that the $0^{th}$ and the $+/-1^{st}$ diffraction orders have the strongest influence on the signals formed at/sensed by the sensors. Accordingly, in preferred embodiments of the invention, the $0^{th}$ diffraction order has a different optical state to the optical state of the $+/-1^{st}$ diffraction orders (e.g. a different polarisation state and/or wavelength state). This can enable selective control over the extent to which, or whether, the $0^{th}$ and/or $+/-1^{st}$ diffraction orders influence or contribute to the signals sensed by the first and second sensors. Although it can be possible to encode the $+1^{st}$ diffraction orders to have a different optical state to the $-1^{st}$ diffraction order, typically it is beneficial to configure the readhead such that they have the same optical state (e.g. the same polarisation and/or wavelength).

The apparatus could be configured such that the first sensor and/or second sensor is/are inherently at least partially blind to a particular optical state (and therefore inherently at least partially blind to one or more diffraction orders). Accordingly, the composition of the signal as sensed by the sensor is dictated by the extent to which the sensor is at least partially blind to the optical state. In preferred embodiments, the encoder apparatus can comprise a first-sensor filter configured to at least partially (e.g. substantially) filter light based on its optical state before it falls on the first sensor and/or a second-sensor filter configured to at least partially (e.g. substantially) filter light based on its optical state before it falls on the second sensor. Accordingly, the diffraction orders can be selectively at least partially (e.g. substantially) filtered out by the first-sensor filter and/or second-sensor filter based on their optical state. Therefore, the light that falls on the first sensor can be filtered differently to the light that falls on the second sensor. If a first-sensor filter and a second-sensor filter are both provided, they can be configured to at least partially (e.g. substantially) filter out different diffraction orders based on their optical states. Accordingly, the composition of the signal as sensed by the first and/or second sensor can be dictated/controlled by said filter(s).

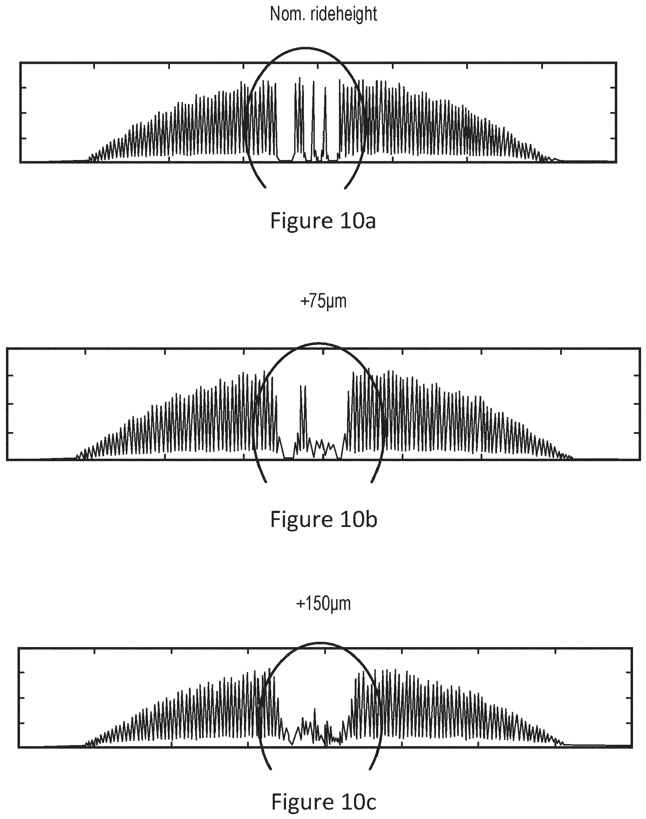

In particularly preferred embodiments, the first-sensor filter prevents substantially all $0^{th}$ diffraction order light from reaching the first sensor (in other words, it substantially filters out the $0^{th}$ diffraction order). In particularly preferred embodiments, the second-sensor filter prevents substantially all $+/-1^{st}$ diffraction order light from reaching the second sensor (in other words, it substantially filters out the $+/-1^{st}$ diffraction orders). As explained below in more detail in connection with Figure 10, substantially filtering out the $+/-1^{st}$ orders can provide better rideheight clarity, and for instance can remove the incremental/higher frequency information from the signal.

As described in more detail below, in preferred embodiments, diffraction orders greater than the $+/-1^{st}$ diffraction order are substantially suppressed/filtered out/prevented from reaching the first and/or second sensors. Accordingly, in preferred embodiments, the signal formed at the first sensor is formed solely from the $+/-1^{st}$ diffraction orders. In other preferred embodiments, the signal formed at the second sensor is formed solely from the $0^{th}$ diffraction order.

The optical state of the diffraction orders can be controlled/imparted/encoded by a diffraction order encoder.

The optical state of the diffraction orders can be imparted/encoded by the scale. Accordingly, the scale can comprise/be the diffraction order encoder. For instance, the scale could comprise a birefringent or hologram scale, such as that described in US Patent Application Publication US2003/0141441, which comprises a polarisation hologram recorded on the scale such that the polarisation orientation of the $+/-1^{st}$ diffraction orders are rotated by 90° relative to the $0^{th}$ diffraction order.

In preferred embodiments, the readhead comprises the diffraction order encoder which encodes at least one diffraction order with a different optical state (or in other words, a different optical property) to that of at least one other diffraction order. Providing the readhead with a diffraction order encoder can be simpler and cheaper than providing a hologram scale. Further details of such a diffraction order encoder are provided below.

Said optical state can comprise a state of polarisation. Accordingly, the first-sensor filter and/or the second-sensor filter could comprise a polarising filter. Accordingly, the diffraction order encoder can be configured to encode at least one diffraction order with a polarisation state different to that of at least one other diffraction order. For instance, the diffraction order encoder could be configured to encode one diffraction order (e.g. the $0^{th}$ diffraction order) such that it is polarised (e.g. vertically polarised) (e.g. such that it has a degree of polarisation of at least 0.5 or 50%, preferably at least 0.75 or 75%, more preferably at least 0.85 or 85%, for example at least 0.9 or 90%). The other diffraction orders could remain unpolarised, or one or more of the other diffraction orders (e.g. the $+/-1^{st}$ diffraction orders) could be polarised differently (e.g. orthogonally) to the $0^{th}$ diffraction order. The diffraction order encoder can comprise at least one polariser element configured to encode the at least one diffraction order with a polarisation state different to that of at least one other diffraction order. In particularly preferred embodiments, the diffraction order encoder comprises a first polariser element configured to encode the $0^{th}$ diffraction order with a first polarisation state, and second and third polariser elements configured to encode the $+/-1^{st}$ diffraction orders with a second polarisation state different to the first polarisation state. Optionally, a polariser element comprises a polariser configured to polarise (e.g. increase the degree of polarisation of) at least one diffraction order. Optionally, a polariser element comprises at least one polarisation manipulator, e.g. a waveplate or retarder, configured to change the polarisation state of at least one diffraction order, e.g. configured to rotate the polarisation orientation of said at least one diffraction order. In such a case, the diffraction order(s) will need to be polarised before the diffraction order encoder. For example, the light source could be a polarised light source, or a polariser can be placed in the optical path before the waveplate.

Said optical state can comprise a wavelength state. Accordingly, the first-sensor filter and/or the second-sensor filter could comprise a wavelength filter. For example, the diffraction order encoder could be configured to encode the at least one diffraction order with a wavelength state different to that of at least one other diffraction order. For instance, the diffraction order encoder could be configured to encode one diffraction order (e.g. the $0^{th}$ diffraction order) such that it has light falling within a first band of wavelengths. The apparatus could be configured such that the wavelengths of the other diffraction orders remain unchanged, or alternatively the apparatus could be configured such that the diffraction order encoder encodes one or more of the other diffraction orders (e.g. the $+/-1^{st}$ diffraction orders) with a second band of wavelengths different to the first band of wavelengths.

In the embodiments in which the readhead comprises the diffraction order encoder, the light source and the diffraction order encoder could be provided on a single mount member, in other words a single substrate, for instance a glass substrate.

The readhead can comprise at least one optical relay element for relaying diffraction orders from the scale toward the first and second sensors. For instance, the readhead can comprise at least one refractive and/or diffractive optical relay element for relaying diffraction orders from the scale toward the first and second sensors. Suitable optical relay elements include a lens and/or a diffraction grating. The diffraction order encoder could be located to interact with the one or more diffraction orders before the optical relay element or after the optical relay element. Optionally, the diffraction order encoder and optical relay element could be one and the same thing (e.g. the at least one optical relay element could comprise the diffraction order encoder integrated within it).

Optionally, the apparatus is configured such that the diffraction orders converge to corresponding/respective spots (or "different points of convergence") in the optical path between the optical relay element and the sensor. For instance, there can be a spot/point of convergence for each diffraction order, e.g. a $0^{th}$ diffraction order spot/point of convergence, a $+1^{st}$ diffraction order spot/point of convergence, a $-1^{st}$ diffraction order spot/point of convergence, and so on. Such spots could be located at a focal plane of the optical relay element for relaying the diffraction orders (focal plane of the lens). The diffraction order encoder can be located substantially at those points of convergence. For example, the diffraction order encoder can be located at the focal plane of the optical relay element for relaying the diffraction orders, for example at the focal plane of the optical relay element. The spots could be formed at a conjugate plane of the light source. Accordingly, the spots could be images of the light source.

The optical states of diffraction orders greater than the $+/-1^{st}$ diffraction orders can be configured such that the extent to which, or whether, they influence or contribute to the signal sensed by the first and/or second sensor can be selectively controlled. Such diffraction orders could include, for example the $+/-3^{rd}$ diffraction orders and/or the $+/-5^{th}$ diffraction orders. Alternatively, in some embodiments, many of which are preferred embodiments, the diffraction orders greater than the $+/-1^{st}$ diffraction orders are simply prevented/stopped/blocked from reaching the first and second sensors such that they have no influence on the signal formed at the first and second sensors. Such diffraction orders could be stopped by way of absorption, deflection, scattering and/or reflection. For instance, opaque material can be located at said above-described spots/points of convergence for select or all diffraction orders greater $+/-1^{st}$ diffraction orders than the at the conjugate plane of the light source so as to absorb and block such diffraction orders. Optionally, the diffraction order encoder is configured to encode diffraction orders greater $+/-1^{st}$ diffraction orders with an optical state such that they do not interact/interfere with the $0^{th}$ and/or $+/-1^{st}$ diffraction orders at the at least first sensor (and second sensor if present), or such that they are at least partially (e.g. substantially) filtered out by an appropriate filter before they reach the at least first sensor (and second sensor if present) (e.g. are filtered out by the first-sensor filter and/or second-sensor filter).

The scale could be illuminated with collimated light (and optionally the diffraction orders from the scale could themselves be collimated). Optionally, the readhead comprises an optical collimator element for collimating light from the light source. Optionally, the same optical element is used for collimating light from the light source and for relaying the diffraction orders toward the first and second sensors. Optionally, the same optical element is used for collimating light from the light source and for causing the diffraction orders to converge to corresponding/respective spots.

The apparatus can be configured such that the first and second sensors are located substantially at a conjugate plane of the scale. Accordingly, the position measurement encoder apparatus could be described as being an imaging encoder apparatus, wherein an image (or pseudo-image) of the scale is formed at the first and second sensors.

Preferably the scale comprises what is commonly referred to as an amplitude scale or "Ronchi" scale (c.f. a phase scale). As will be understood, in an amplitude or "Ronchi" scale, the features are configured to control the amplitude of light reflected (or transmitted in a transmission scale embodiment) toward the readhead (in particular towards its first and second sensor), e.g. by selectively absorbing, scattering and/or reflecting the light. In contrast a phase scale configured to control the phase of the light reflected (or transmitted in a transmission scale embodiment) toward the readhead (in particular towards its first and second sensor), e.g. by having scale features of different depths controlled to less than the wavelength of the light. Typically, amplitude scale produces significant $0^{th}$ diffraction order along with significant $+/-1^{st}$ diffraction orders (plus higher $+/$odd diffraction orders of decreasing intensity), which is in contrast to phase scale which does not produce any $0^{th}$ diffraction order.

Optionally, the period of the scale is not more than 40 $\mu$m, preferably not more than 20 $\mu$m, for instance not more than 10$\mu$m, for example approximately 8 $\mu$m.

Preferably, the scale comprises a feature-space (or "mark"-space) ratio of 1:1. Accordingly, in other words, the ratio of the width of the scale features to their spacing) of the scale is 1:1.

The scale could be a transmissive scale. Preferably the scale is a reflective scale. Accordingly, preferably the light source and the first and second sensors of the readhead are located on the same side of the scale.

Optionally, the position measurement encoder apparatus is a one-grating encoder system, wherein the scale comprises the only diffraction grating in the optical path between the light source and the first and second sensors.

The scale's series of position features could be provided in at least one track (a "scale track"). The scale could comprise one or more scale tracks.

The signal produced at the first sensor can comprise an incremental position signal, for instance an interference fringe pattern or modulated spots. Accordingly, the first sensor can comprise an incremental position sensor. The period of the fringe could be M.p/2, where M is the magnification factor of the encoder's optical system, and p is the period of the scale (this is the case/can be achieved when the 0$^{th}$ diffraction order has been substantially removed). The scale can comprise an incremental scale track, comprising a series of periodic features defining an incremental scale track. One or more reference marks can be provided, embedded within and/or located adjacent the incremental scale track. Such a reference mark can comprise an optical reference mark. Accordingly, optionally the signal produced at the sensor can comprise a reference mark signal. The second sensor can be configured to detect the reference mark signal produced by the reference mark.

Optionally, the signal produced at the second sensor comprises an absolute position signal. Accordingly, the second sensor can comprise an absolute position sensor. Accordingly, the scale can comprise an absolute scale track, comprising a series of position features defining an absolute scale track. As will be understood, an absolute scale track differs to an incremental scale track (with or without reference marks) in that its features define a series of unique positions along the length of the scale which can be readhead by the readhead such the relative position of the readhead and scale can be determined (e.g. on start-up) at any position along the scale without requiring movement to a reference position (e.g. a reference mark). Examples of absolute scales include those described in US Patents US7499827 and US5279044. The scale could comprise separate incremental and absolute scale tracks. Optionally, the incremental and absolute scale features are combined in one track. For instance, the absolute scale features could be superimposed on the periodic incremental scale features. As is known, and as is explained in the prior art referred to above in this paragraph, absolute position information can be encoded in a scale track by omitting select position features from an otherwise periodic series of position features.

As will be understood, the scale can comprise a first and a second series of position features which are readable by the readhead. As will be understood, the first series of position features can produce a first set of diffraction orders and the second series of position features can produce a second set of diffraction orders (which produce said signals detected by the first and second sensors). These first and second sets of diffraction orders can be superimposed on each other/spatially overlapping. It might be that the position measurement encoder apparatus is configured such that only one of the first and second sets of diffraction orders has diffraction orders having different optical states. For example, the position encoder apparatus could be configured such that at least one diffraction order (e.g. the 0$^{th}$ diffraction order) of the first set of diffraction orders has an optical state different to that of at least one other diffraction order (e.g. the +/-1$^{st}$ diffraction order) of the first set of diffraction orders, but the diffraction orders (e.g. at least the 0$^{th}$ and +/-1$^{st}$ diffraction orders) of the second set of diffraction orders could have the same optical state. Alternatively, the position measurement encoder apparatus could be configured such that at least one diffraction order of the first set of diffraction orders has an optical state different to that of at least one other diffraction order, and such that at least one diffraction order of the second set of diffraction orders has an optical state different to that of at least one other diffraction order. Either way, as will be understood, the first and second sets of diffraction orders can be filtered differently based on their optical states.

The first and/or second series of position features can be periodic (in other words, the scale can comprise a first periodic series of position features and a second periodic series of position features). The period of the first series of position features can be different to the period of the second series of position features. For instance, the scale can comprise a scale track comprising a first series of position features having a first period (e.g. a relatively fine period) and a second series of position features having a second period (e.g. a relatively coarse period, i.e. coarser than the period of the first period). The first and/or second series of position features can be provided in the same track, i.e. embedded within each other/superimposed on each other.

As will be understood, the output of the first sensor and the output of the second sensor can provide one or more signals which can be used to indicate relative position information (concerning the readhead and scale). As explained in more detail later in this document, such position information can be incremental or absolute position information. Such position information can be an index (also known as a "reference", or "datum") position information. The position information could be linear position information or angular position information (e.g. in the case of a rotary encoder apparatus). The readhead could output the raw, unprocessed signal(s) from the sensor(s). Optionally, the readhead can process the signal(s) from the sensor(s) and output one or more signals derived from the signal(s) from the sensor(s). As is commonly the case with position encoders, the readhead can output sin and cos signals (commonly referred to as "quadrature" signals) which change with a change in the relative position (i.e. which change with relative motion) of the scale and readhead. The readhead could output analogue or digital signals representative of the relative position of the scale and readhead. For instance, the quadrature signals could be analogue or digital quadrature signals. Optionally, the readhead can maintain and output an incremental "count" of the position of the readhead and scale (e.g. which could be counted from an index position). Optionally, the readhead can output digital codewords representative of the relative position of the scale and readhead. For example, the readhead can output absolute digital codewords representative of the absolute relative position of the scale and readhead. As will also be understood, a controller can use the output of the readhead to determine how to control the apparatus/device on which the encoder apparatus is installed.

The position measurement encoder apparatus could be a linear encoder or a rotary encoder apparatus. Accordingly, the scale could be a linear scale or a rotary scale (in which case the scale could be a ring scale or disc scale).

According to a second aspect of the invention there is provided a position measurement encoder apparatus, comprising: a scale comprising a series of features which are readable by a readhead so as to determine a relative position of the scale and the readhead; a readhead comprising:

- a light source for illuminating the scale,
- a primary position information sensor,
- a secondary position information sensor,
- a lens configured to relay light diffracted by the scale to both the primary position information sensor(s) and the secondary position information sensor(s),
- a primary-sensor filter configured to filter light before it falls on the primary position information sensor(s); and/or
- a secondary-sensor filter configured to filter light before it falls on the secondary position information sensor(s);

wherein the readhead further comprises an optical diffraction order encoder located in the path of the diffracted light relayed to the primary and secondary position sensors, which encodes different diffraction orders of the light with different optical states, which are subsequently selectively filtered by the at least one primary-sensor and/or at least one secondary-sensor filters wherein the light that falls on the primary position information sensor has been filtered differently to the light that falls on the secondary position information sensor. The statements made above in connection with the first aspect of the invention also apply to this second aspect of the invention.

Embodiments of the invention will now be described, by way of example only, with reference to the following drawings, in which:

Figures 1a and 1b are schematic diagrams, illustrating the optical workings of a generic prior art position encoder system;

Figure 2 illustrates an incremental scale and a readhead of an encoder apparatus according to the present invention;

Figure 3 schematically illustrates the various optical components located within the readhead of Figure 2 according to a first embodiment of the invention;

Figures 4 and 5 are schematic optical diagrams of the encoder apparatus of Figure 2 and 3;

Figure 6 is a graph illustrating the effect the $0^{th}$ order has on the visibility of the fringes falling on the sensor as the distance between the scale and the readhead changes;

Figure 7 illustrates an example electrograting sensor for use in the readhead of Figures 2 to 5;

Figure 8a illustrates example reference mark signals from the reference mark photodiodes of the readhead of Figures 2 to 5 and Figure 8b illustrates a difference signal obtained therefrom;

Figure 9 schematically illustrates an incremental scale and a readhead of an encoder apparatus according to a second embodiment of the invention;

Figures 10 and 11 are graphs illustrating the effect of filtering out the +/-$1^{st}$ diffraction orders on the image (or "pseudo-image") at the readhead's detector plane;

Figure 12 schematically illustrates an incremental scale and a readhead of an encoder apparatus according to a

third embodiment of the invention;

Figure 13 schematically illustrates an incremental scale and a readhead of an encoder apparatus according to a fourth embodiment of the invention;

Figure 14 schematically illustrates an absolute scale and readhead of an encoder apparatus according to a fifth embodiment of the present invention;

Figure 15 schematically illustrates an absolute scale and readhead of an encoder apparatus according to a sixth embodiment of the present invention;

Figure 16 schematically illustrates a scale and readhead of an encoder apparatus according to a seventh embodiment of the present invention;

Figure 17 schematically illustrates a scale and readhead of an encoder apparatus according to an eighth embodiment of the present invention;

Figure 18 schematically illustrates a schematic optical diagram of an encoder apparatus according to a ninth embodiment of the present invention;

Figure 19 illustrates an example optical retarder element for use with the embodiment of Figure 16; and

Figure 20 schematically illustrates a scale and readhead of an encoder apparatus according to a tenth embodiment of the present invention.

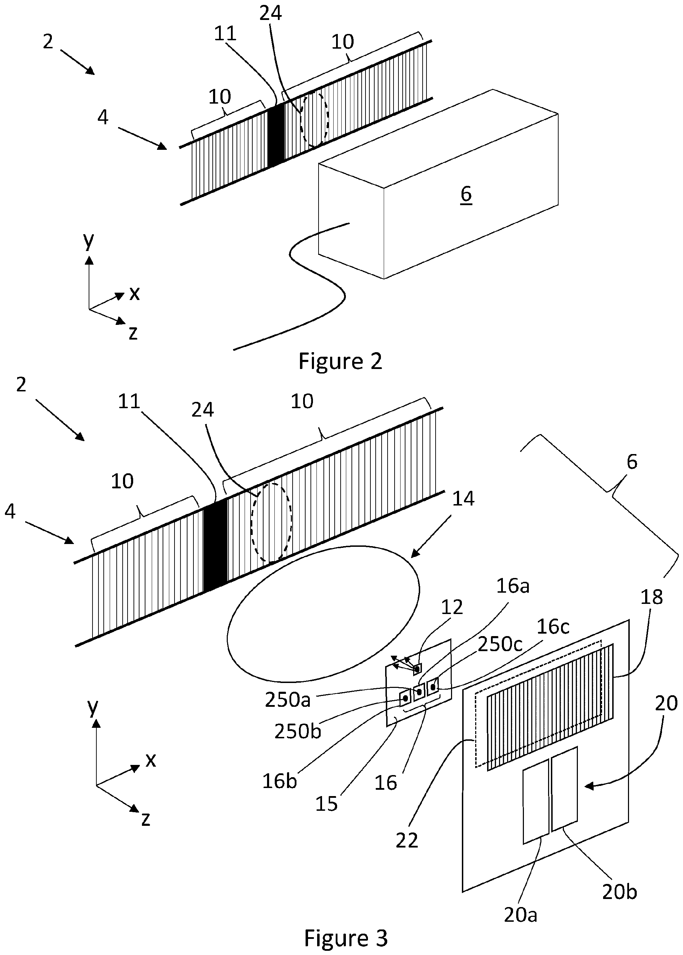

Referring to Figure 2, an encoder apparatus 2 according to the present invention comprises a scale 4 and a readhead 6. The readhead 6 is moveable in the X-dimension relative to the scale 4 (although it could be the other way around, or indeed both could be moveable). For example, the scale 4 could be mounted to a stationary part of a machine (not shown) and the readhead 6 mounted to a moveable part of a machine (not shown). The scale 4 could take many different forms, including for example linear scale as illustrated or rotary scale (e.g. provided on a ring wherein the scale features are provided on its circumferential edge, or on a disc wherein the scale features are provided on its planar face).
In the embodiment described, the scale 4 is an amplitude scale (in that it controls the amplitude of light leaving the scale toward the readhead) and comprises a substrate which has incremental features 10 in the form of periodic dark/relatively non-reflective lines made on an otherwise relatively reflective substrate such that between the incremental features 10 the scale is relatively reflective. Of course, the scale's incremental features 10 could be made in other ways, such as for example by forming relatively reflective lines on an otherwise relatively non-reflective substrate, or even by forming both the relatively reflective and non-reflective lines on a substrate. As will also be understood, the incremental features 10 could be provided in other ways, for example, the scale's incremental features 10 could be provided in the form of reflective facets or lines which reflect the light toward and away from the readhead. In the embodiment described, the scale's substrate is metal, although as will be understood other materials such as glass for instance could be used.
The scale 4 could be a phase scale, in which peaks and pits in the scale modulate the phase of light leaving the scale toward the readhead. However, as will become apparent throughout the rest of this specification, the present invention has been found to be particularly useful when used in connection with amplitude scale rather than phase scale, due to the presence of a $0^{th}$ diffraction order produced by amplitude scale (whereas the $0^{th}$ diffraction order does not tend to be produced by a phase scale).
The incremental features 10 form the incremental scale facilitating measurement along the X axis (the "measurement dimension"). In the embodiment shown, a reference mark 11 is embedded within the incremental features 10. In the embodiment described, the reference mark comprises a single continuous block, formed by the omission of a plurality of successive reflective lines.
Figure 3 illustrates the various optical components located within the readhead 6 (the body of which has been omitted from Figure 3 for the sake of clarity). In this embodiment, the readhead comprises a light source 12, in this embodiment in the form of a light emitting diode (LED) (which in this embodiment emits infra-red light), a lens 14, a diffraction order encoder 16 (which could also be called "an optical spatial encoder"), a first (hereinafter referred to as "primary") position information sensor 18, a second (hereinafter referred to as "secondary") position information sensor 20, and first("primary")-sensor filter 22. The light source 12 and diffraction order encoder 16 are provided in substantially the same plane, on an opaque substate 15. As will by understood, this substrate 15 area does not actually need to be opaque, but being opaque means that the other diffraction orders are blocked which can be beneficial. As will be explained in more detail below, in this embodiment, the primary position information sensor is configured to detect a signal/resultant field produced by the incremental features 10 and to output a signal from which the incremental position can be determined/monitored, and the second position information sensor is configured to detect a signal/resultant field produced by the reference mark 11 and to output a signal which indicates the presence of the reference mark. Accordingly, the primary position information sensor 18 could be (and will hereinafter be) referred to as an incremental sensor 18 and the secondary position information sensor 20 could be (and will hereinafter be) referred to as a reference mark sensor 20.

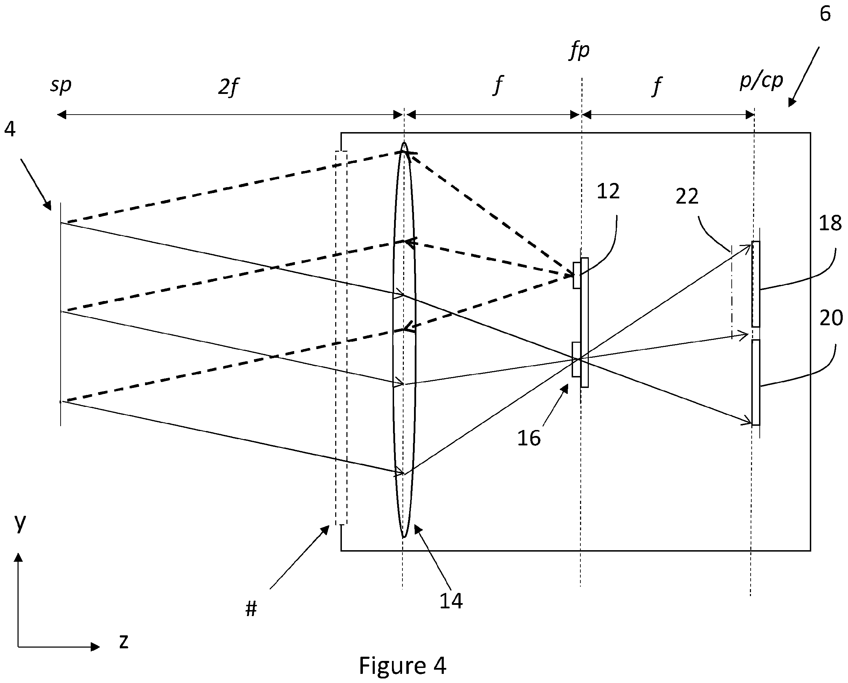

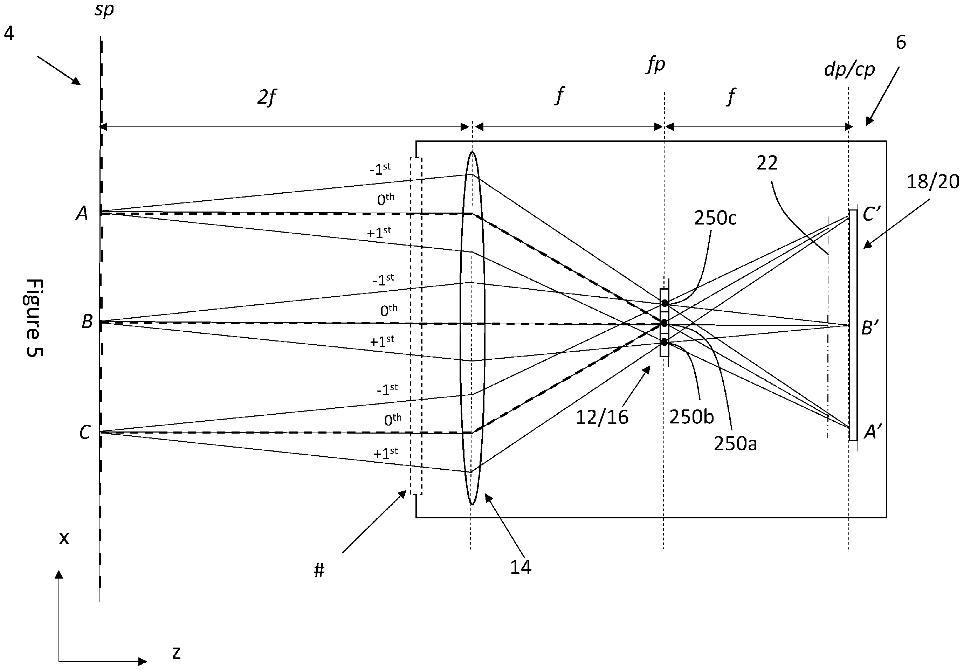

The optical configuration of the encoder apparatus 2 will now be described in more detail with reference to Figures 3, 4 and 5. Light from the LED 12 is emitted toward the scale 4 via the lens 14. The LED 12 is positioned substantially at the focal plane $fp$ of the lens 14, such that light from the LED 12 is substantially collimated by the lens 14. The light from the LED 12 illuminates a footprint 24 on the scale. Light travelling toward the scale is schematically illustrated by bold dashed rays in Figures 4 and 5, whereas light returning from/reflected by the scale is illustrated by thin solid rays.

The lens 14 relays light reflected by the scale 4 to the incremental 18 and reference mark 20 sensors.

As will be understood, owing to the well-known natural phenomenon of diffraction, light reflected by the scale 4 will be diffracted due to the presence of the scale features thereon. In the case of the incremental features 10, which are periodic, the light reflected thereby will be diffracted into identifiable diffraction orders. As explained above in connection with Figures 1a and 1b, the light will predominantly be diffracted in the X-dimension into 0th and +/-1st diffraction orders. Higher diffraction orders (e.g. +/-3rd and +/-5th) will also be present, but these are not illustrated because they have a substantially lower intensity than the 0th and +/-1st diffraction orders, and in any case are blocked from progressing to either the incremental 18 or reference mark 20 sensors by the opaque substrate 15.

The diffracted orders are incident on the lens 14, which causes corresponding diffraction orders to converge so as to form spots 250 at the back focal plane $fp$ of the lens 14; each spot being formed from a respective diffraction order. The spots 250 are images of the light source, in that the back focal plane $fp$ is the conjugate plane of the plane at which the light source is located.

In this embodiment, the diffraction order encoder 16 is co-located with the spots 250. In particular, in this embodiment, the diffraction order encoder 16 comprises a polarising filter 16a (e.g. having a "vertical" polarisation axis) which coincides with the 0th diffraction order spot 250a, and first 16b and second 16c non-polarised transparent regions which coincide with the +/-1st diffraction order spots 250b, 250c. Accordingly, the diffraction order encoder 16 encodes the 0th diffraction order with vertically polarised light whilst leaving the +/-1st diffraction orders unpolarised. Accordingly, the 0th diffraction order has a different optical state to that of the +/-1st diffraction orders.

The 0th and +/-1st diffraction orders propagate toward the incremental 18 and reference mark 20 sensors. As mentioned above, the primary-sensor filter 22 is located in the optical path of the diffraction orders heading toward the incremental sensor 18. The primary-sensor filter 22 comprises a polarising filter having a "horizontal" polarisation axis, i.e. one which is orthogonal to the polarisation axis of the first polarising filter 16a. Accordingly, 0th order diffracted light is substantially blocked from reaching the primary position information sensor. In contrast, +/- 1st order diffracted light can pass through the primary-sensor filter 22 (albeit becoming "horizontally" polarised in the process), and thereby fall on the incremental sensor 18. In particular, the +/- 1st diffraction orders propagate toward the incremental sensor 18, and interact (constructively and destructively interfere) to form an interference fringe pattern (or "fringe field") which falls on the incremental sensor 18.

Blocking the 0th diffraction order provides a number of improvements to the interference fringe pattern which falls on the incremental sensor 18. In particular, the interference fringe pattern visibility is improved. Also, removal of the 0th diffraction order means that the interference fringe pattern produced at the incremental sensor 18 has a period equal to M.p/2 (which is half of the system which does not block the 0th diffraction order). Accordingly, blocking the 0th diffraction order effectively doubles the system resolution.

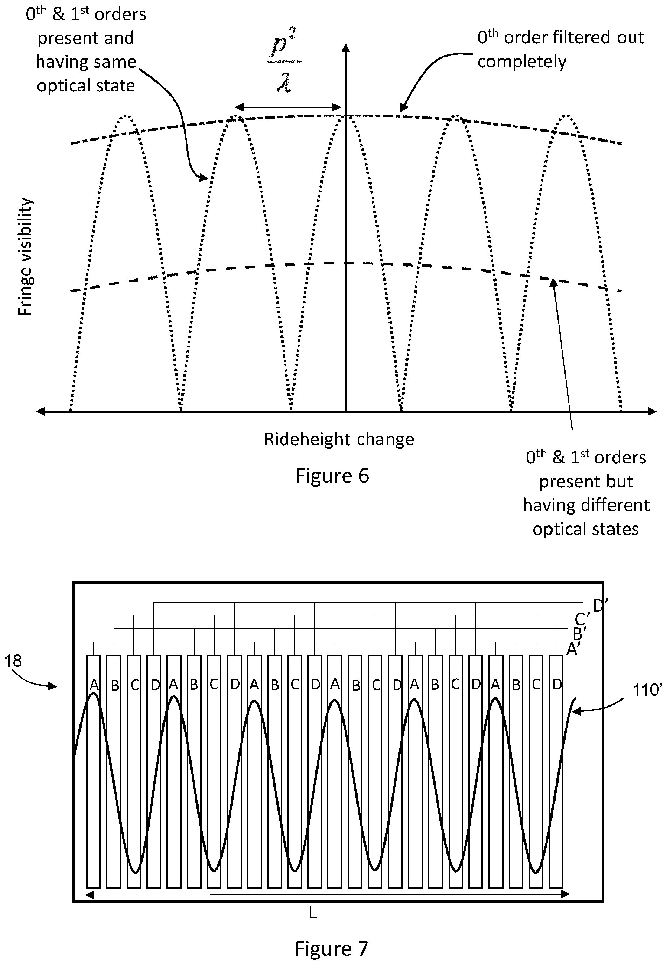

Figure 6 illustrates another advantage of removing the 0th diffraction order. In particular, Figure 6 shows the effect blocking the 0th diffraction order has on the visibility of the fringes falling on the incremental sensor 18 as the distance (commonly known as the "rideheight") between the scale 4 and the readhead 6 changes. As shown, when the 0th diffraction order contributes fully to the fringe field, the visibility of the fringe field is modulated in the direction of propagation with a period of $p^2/\lambda$, where $p$ is the scale period and $\lambda$ is the wavelength of the light. If the 0th order is eliminated, the modulation is no longer present. This is beneficial because it allows an encoder apparatus with a scale which produces a 0th diffraction order to have a rideheight tolerance which is independent of the scale period.

Accordingly, in summary, blocking the 0th diffraction order produced by the scale improves the absolute fringe visibility of the fringe field falling on the incremental sensor 18, effectively doubles the system resolution, and significantly improves the rideheight tolerance of the readhead.

Furthermore, if the diffraction orders >1st are also blocked (as is the case in this embodiment due to the opaque substrate 15, but could also be done by way of encoding them with the same optical state as the 0th diffraction order, e.g. with the same polarisation state), then higher order harmonics are removed from the fringe field, providing a purer interference fringe pattern. As will be understood, in an alternative embodiment, blocking the diffraction orders >1st is not necessary, and for instance, the substrate 15 could be transparent (in which case the first 16b and second 16c non-polarised transparent regions might not be distinctly identifiable).

In the described embodiment, there is no corresponding filter in front of the reference mark sensor 20. Accordingly, the $0^{th}$ and the $+/-1^{st}$ diffraction orders all fall on the reference mark sensor 20. Depending on various factors (which will be described in more detail below) it could in some circumstances be favourable to not place a corresponding filter in front of the reference mark sensor. Indeed, if the presence of both the $0^{th}$ and the $+/-1^{st}$ diffraction orders falling on the reference mark sensor have no detrimental effect on the optical signal, e.g. "image" or "pseudo-image" (see later), formed at the reference mark sensor 20, then there is no advantage to providing corresponding filter in front of the reference mark sensor 20 (and indeed, doing so could be detrimental owing to reduced photometry).

Accordingly, as explained above, the signal sensed by the incremental sensor 18 is formed from only $+/-1^{st}$ diffraction orders, whereas the signal sensed by the reference mark sensor 20 is formed from the $0^{th}$ and $+/-1^{st}$ diffraction orders. Accordingly, the signal sensed by the incremental sensor 18 is formed from a diffraction order composition that is different to that of the signal sensed by the reference mark sensor 20.

One thing to note is that in this embodiment the $0^{th}$ order and the $+/-1^{st}$ diffraction orders are unevenly attenuated due to only the $0^{th}$ order having been polarised by the first polariser 16a. If desired, uneven attenuation could be avoided by replacing the first 16b and second 16c non-polarised transparent regions with second 16b and third 16c polarising filters which have a "horizontal" polarisation axis (i.e. having a polarisation axis that is orthogonal to the polarisation axis of the first polarising filter 16a). In such an embodiment, the $0^{th}$ and the $+/-1^{st}$ diffraction orders falling on the reference mark sensor 20 will have been equally attenuated, which could result in a better quality image falling on the reference mark sensor. Furthermore, the $+/-1^{st}$ diffraction orders will still pass through the primary-sensor filter 22 and interfere to form an interference fringe pattern on the incremental sensor 18.

Accordingly, in accordance with the present invention, this embodiment, the light falling on the incremental sensor 18 has been filtered differently to the light falling on the reference mark 20 sensor.

The light falling on the incremental 18 and reference mark 20 sensors could be described as being an "image" of the scale 4, in that the incremental 18 and reference mark 20 sensors are positioned at a detector plane *dp* which is in the embodiment shown and described is coplanar with the conjugate plane *cp* of the scale plane *sp* (such that, for example, light from point A on the scale is imaged to point A' on the sensor, light from point B on the scale is imaged to point B' on the sensor, and light from point C on the scale is imaged to point C' on the sensor). However, as will be understood, the suppression/blocking of selective diffraction orders such that they do not reach the sensors will have an effect on the "image" as seen at the conjugate plane *cp*. For example, removal of the $0^{th}$ diffraction order (and diffraction orders greater than the $1^{st}$ diffraction order due to the opaque substrate 15 blocking them) means that the "image" at the conjugate plane *cp* as falling on the incremental sensor 18 has a purer sinusoidal waveform rather than a square-shaped waveform, and so the image on the sensor is not actually a "true" or "perfect" image of the scale 4 (but rather could be referred to as a pseudo-image of the scale). As will be understood, owing to the presence of the $0^{th}$ order at the reference mark sensor 20, the "image" of the scale 4 at the reference mark sensor 20 is affected to a lesser extent, especially when both the $0^{th}$ and $+/-1^{st}$ diffraction orders have been polarised by the diffraction order encoder 16 such that they fall on the reference mark sensor 20 with equal measure.

In the embodiment described, the incremental sensor 18 is in the form of an electrograting, which in other words is a photo-sensor array which comprises two or more sets of interdigitated/interlaced/interleaved photo-sensitive sensor elements (also referred to herein as "photodetectors" or "fingers"). Each set can, for example, detect a different phase of the interference fringe pattern field at the incremental sensor 18. An example of an electrograting is illustrated in Figure 7, in which a part of an electrograting is shown, and in which the fingers/photodiodes of four sets of photodiodes (A, B, C and D) are interdigitated/interleaved to form an array of sensor elements extending along the length "L" of the sensor.

The output from each finger/photodiode in a set is combined to provide a single output, thereby resulting in four channel outputs: A', B', C' and D'. These outputs are then used to obtain the quadrature signals SIN and COS. In particular, A'-C' is used to provide a first signal (SIN) and B'-D' is used to provide a second signal (COS) which is 90 degrees out of phase from the first signal. Although in the specific embodiment the electrograting comprises four sets of photodiodes providing four the channels A', B', C' and D', this need not necessarily be the case. For example, the electrograting could comprise two sets of photodiodes providing just two channels A' and B'.

As will be understood, other types of sensor could be used instead of the above described electrograting. For example, in embodiments in which modulated spots are created by the readhead's optical system instead of an interference fringe pattern, bulk sensor photodiodes could be used to detect the intensity of the modulated spots (e.g. as described in US4776701). Similar to a system which produces an interference fringe pattern, in a system which produces modulated spots, encoding the $0^{th}$ and $+/-1^{st}$ diffraction orders such that they do not interfere with each other at the sensor effectively doubles the resolution of the encoder system (in that the intensity of the spots modulate with a frequency of *p/2*). Similarly, encoding the diffraction orders higher than the $+/-1^{st}$ diffraction orders with an optical state different to the $+/-1^{st}$ diffraction orders reduces/removes, harmonics on the modulated spot intensity.

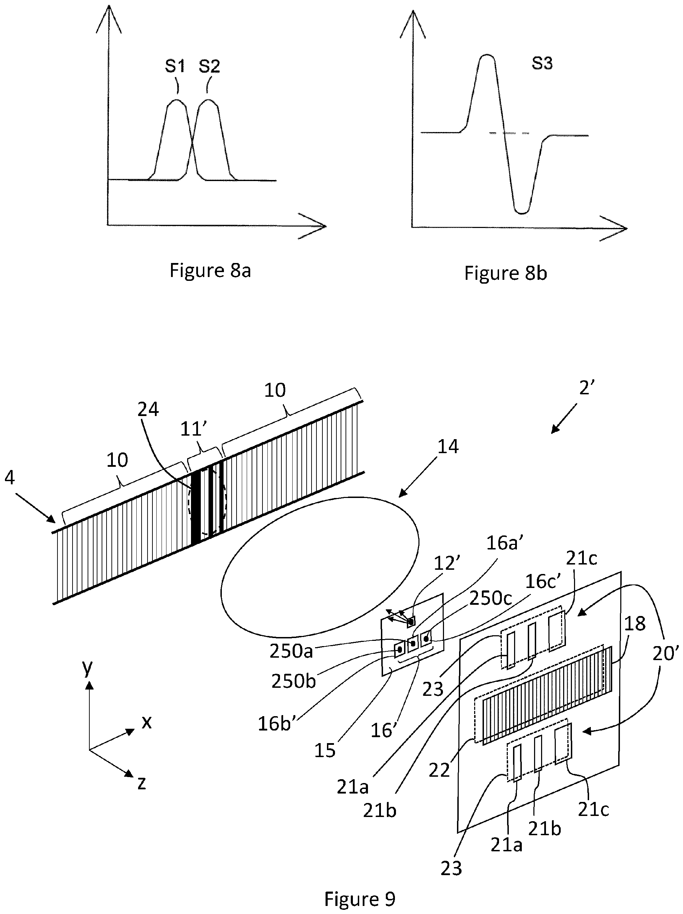

In the embodiment described, the reference mark sensor 20 comprises a split detector comprising first 20a and second 20b photodiodes. Figure 8a schematically illustrates the outputs (S1, S2) from the first 20a and second 20b photodiodes as the readhead 6 moves along the scale 4 and passes over the reference mark 11. Signals S1 and S2 from the first 20a and second 20b photodiodes are subtracted to form a difference signal S3 shown in Figure 8b. The position of the reference mark can be determined by identifying where the falling edge of signal S3 crosses a known threshold in the reading direction shown. As will be understood, although in this embodiment a split detector is used to detect the reference mark, other types of detector, and/or other techniques for identifying the presence of the reference mark may be used.

In the embodiment described above, the $0^{th}$ diffraction order is completely filtered out by the polarising filter 22. However, although it may be most preferred that the $0^{th}$ diffraction order is completely filtered out, this need not necessarily be the case and benefits could be had from at least partially filtering out the $0^{th}$ diffraction order, e.g. such that its influence on the signal sensed by the first sensor is reduced by 50% (e.g. compared to its influence on signal sensed by the reference mark sensor 20).

Referring now to Figure 9, another embodiment of an encoder apparatus 2' according to the present invention is shown. This embodiment is similar to that shown in, and described above in connection with Figure 3, and like parts share like reference numerals. Differences include that unlike the continuous reference mark 11 of Figure 3, the reference mark 11' comprises a patterned reference mark, in this embodiment comprising one thick dark band, and two thin dark bands, each separated along the measuring direction by at least one incremental feature between them. The term "patterned" in the expression "patterned reference mark" is not being used to imply that the reference mark has a repeating design/form, but rather is being used to confer that the reference mark has a non-uniform design/form. Of course, the "patterned reference mark" could have a repeating form/design, or may not have a repeating form/design. The reference mark sensor 20' comprises two sets of correspondingly arranged and shaped/sized photodiodes 21a, 21b, 21c, located on opposing sides of the incremental sensor 18. Each of the sets of photodiodes 21a, 21b, 21c of the reference mark sensor 20' are configured such that, when, and only when, the readhead 6 and reference mark 11' are aligned, the image (or "pseudo-image") of the reference mark 11' pattern falls on, and lines up/correlates with the pattern of the three photodiodes 21a, 21b, 21c of the reference mark sensor 20', thereby causing a significant and sharp change in intensity of light falling thereon. In this embodiment, wherein the reference mark 11' comprises dark bands, there will be a significant drop in the intensity of light received at the reference mark sensor 20' when the readhead 6 and reference mark 11' are aligned. Signal processing electronics and/or software downstream of the reference mark sensor 20' can be configured to identify such a change in intensity of light received at the reference mark sensor 20' and output a signal indicating the presence of the reference mark. As far as the downstream signal processing electronics and/or software is concerned, the two sets of correspondingly arranged photodiodes 21a, 21b, 21c act as one photodiode.

In this embodiment, the diffraction order encoder 16' comprises a first 16a', second 16b' and third 16c' polarising filters respectively coincident with the $0^{th}$, $+1^{st}$ and $-1^{st}$ diffraction order spots 250a, 250b, 250c, so as to polarise the $0^{th}$, $+1^{st}$ and $-1^{st}$ diffraction orders. The polarisation axis of the second 16b' and third 16c' polarising filters are configured with the same orientation as each other, such that the +/-$1^{st}$ diffraction orders are polarised by the second 16b' and third 16c' polarising filters such that they have the same (e.g. "horizontal") polarisation orientation as each other. The polarisation axis of the first polarising filter 16a' is configured with a different, and preferably orthogonal, orientation to polarisation axis of the second 16b' and third 16c' polarising filters, such that the $0^{th}$ diffraction order is polarised with a different (e.g. "vertical") polarisation orientation to the +/- $1^{st}$ diffraction orders. Accordingly, the diffraction order encoder 16' encodes the $+1^{st}$ and $-1^{st}$ diffraction orders with a first polarisation orientation, and encodes the $0^{th}$ diffraction order with a second polarisation orientation that is different to the first polarisation orientation. As shown, the first 16a', second 16b' and third 16c' polarising filters are spaced apart from each other such that they do not directly touch each other, but this need not necessarily be the case.

The polarised diffraction orders propagate toward the incremental 18 and reference mark 20' sensors. In the same way as the embodiment described above in connection with the embodiment of Figure 3, a primary-sensor filter 22 is located in the optical path of the diffraction orders heading toward the incremental sensor 18. The primary-sensor filter 22 comprises a polarising filter having a polarisation axis which is parallel to that of the second 16b' and third 16c' polarising filters (and therefore is orthogonal to the polarisation axis of the first polarising filter 16a'). Accordingly, $0^{th}$ order diffracted light is blocked from reaching the primary position information sensor. In contrast, +/- $1^{st}$ order diffracted light can pass through the primary-sensor filter 22, and thereby fall on the incremental sensor 18. In particular, the +/- $1^{st}$ diffraction orders propagate toward the incremental sensor 18, and interact (constructively and destructively interfere) to form a fringe field which falls on the incremental sensor 18. The benefits of preventing the $0^{th}$ diffraction order from contributing to the optical signal falling on the incremental sensor 18 was described above in connection with the embodiment of Figure 3.

In contrast to the embodiment of Figure 3, a second("secondary")-sensor filter 23 is located in the optical path of the diffraction orders heading toward the reference mark sensor 20'. In particular, the secondary-sensor filter 23 comprises a polarising filter, having a polarisation axis that is parallel to the polarisation axis of the first polarising filter 16a' (and therefore is orthogonal to the polarisation axis of the second 16b' and third 16c' polarising filters). Accordingly, the secondary-sensor filter 23 will filter out/block the +/- 1st diffraction orders and thereby prevent them from contributing to the optical signal falling on the reference mark sensor 20'. Therefore, only the 0th diffraction order light will reach, and contribute to the optical signal falling on, the reference mark sensor 20'. Accordingly, in this embodiment the signal sensed by the incremental sensor 18 is formed from only +/-1st diffraction orders, whereas the signal sensed by the reference mark sensor 20 is formed from the 0th diffraction order. Accordingly, the signal sensed by the incremental sensor 18 is formed from a diffraction order composition that is different to that of the signal sensed by the reference mark sensor 20.

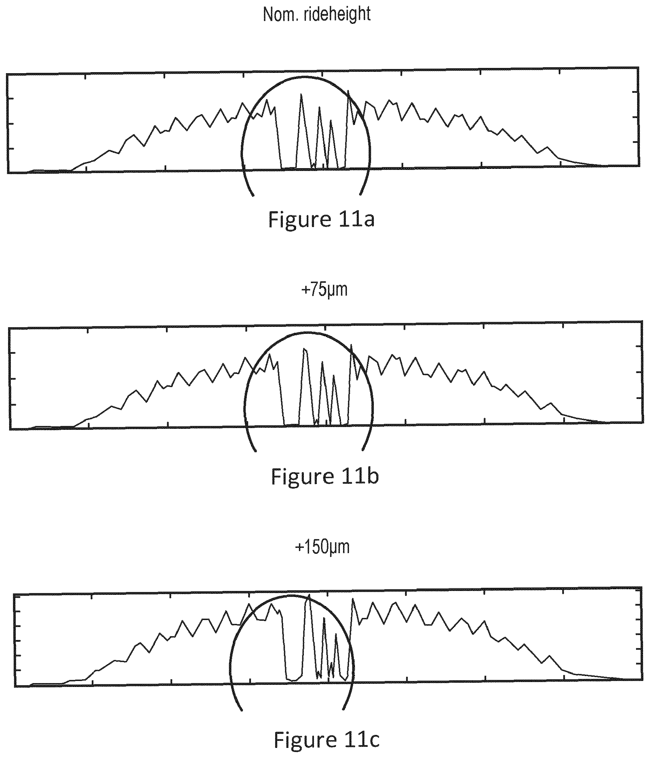

Blocking the +/-1st orders from forming the reference mark signal on the reference mark sensor 20' has been found to be advantageous, in particular in those embodiments where there are incremental features located within the reference mark. In particular, blocking the +/-1st orders from contributing to the reference mark signal can provide better rideheight clarity, and for instance can remove the incremental/higher frequency information from the signal. For example, referring to Figures 10 and 11, the effect of filtering out the +/-1st diffraction orders on the image (or "pseudo-image") at the readhead's detector plane is illustrated. In particular, Figures 10a, 10b and 10c respectively illustrate the image of the scale that will be reconstructed at the readhead's detector plane dp/conjugate plane *cp* from both the 0th and +/-1st diffraction orders when the readhead is located at: a) the readhead's nominal rideheight; b) +75$\mu$m from the nominal rideheight; and c) +150$\mu$m from the nominal rideheight. As illustrated, at the nominal rideheight, the image of the reference mark (highlighted by the circle in Figures 10a to 10c) is good, but is substantially corrupted when the readhead moves away from its nominal rideheight. This has been found to be a particular problem when the reference mark contains periodic incremental features. Such corruption of the image causes the signal output by the reference mark sensor 20' to be broader and less distinct as the readhead passes the reference mark, which can cause problems with the reliability of the reference mark (e.g. the signal is so weak that the reference mark is not detected) and/or the accuracy of the reference mark (e.g. the reference mark signal is so broad that it is not accurate to within one incremental period.

Figures 11a, 11b and 11c respectively illustrate the image of the scale that reconstructed at the readhead's detector plane dp/conjugate plane *cp* from just the 0th diffraction order when the readhead is located at: a) the readhead's nominal rideheight; b) +75$\mu$m from the nominal rideheight; and c) +150$\mu$m from the nominal rideheight. As illustrated by Figure 11, the image of the reference mark (highlighted by the circle in Figures 11a to 11c) reconstructed at the readhead's detector plane dp/conjugate plane *cp* maintains good structure and maintains a good likeness of the reference mark, and in turn provides for a distinct, strong reference mark signal from the reference mark sensor 20', even at rideheights away from the nominal rideheight. Accordingly, it has been found that it can be beneficial to provide a secondary-sensory filter 23 in front of the reference mark sensor 20' which filters out the +/-1st diffraction order such that they do not contribute to the image of the scale reconstructed at the readhead's detector plane dp/conjugate plane *cp*. In particular, for this this configuration placing a secondary-sensory filter 23 in front of the reference mark sensor 20' which filters out the +/-1st diffraction order provides a readhead with better rideheight tolerance.

As will be understood, if desired, the reference mark sensor 20' could comprise a split detector similar to that of Figure 3, wherein the photodiodes 21a, 21b, 21c are duplicated and laterally offset in the X-dimension, and the outputs from the duplicated photodiodes being connected to form the second reference mark output which can be used to provide a difference signal, like that of Figure 8b, from which the presence of the reference mark can be detected.

In an alternative embodiment to that shown in Figure 9, the primary-sensor filter 22 could be omitted. In this case, both the 0th and +/-1st diffraction orders will fall on the incremental sensor 18. However, because they have different polarisation states, they will not interfere with each other. The effect of this on the fringe visibility is illustrated in Figure 6. As shown, like the embodiments in which the 0th diffraction order is prevented from reaching the incremental sensor, the p$^2$/$\lambda$ modulation of the fringe visibility with changes in rideheight is removed. However, the absolute visibility of the fringes is less than those embodiments in which the 0th diffraction order is prevented from reaching the incremental sensor.

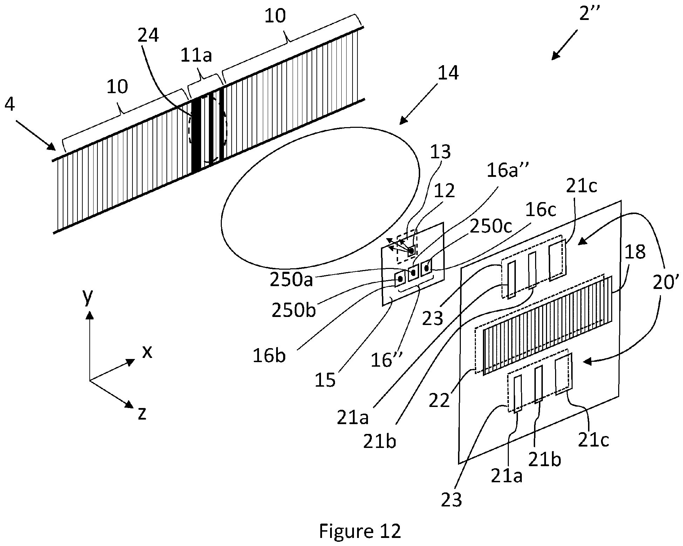

Referring now to Figure 12, another embodiment of an encoder apparatus 2" according to the present invention is shown. This embodiment is substantially identical to that shown in, and described above in connection with Figure 9, and like parts share like reference numerals. In this embodiment, the light of the diffraction orders hitting the diffraction order encoder 16" is already polarised. In this particular embodiment, this is achieved via the presence of a polarising filter 13 through which light emitted from the light source 12 passes before reaching the lens 14. For example, the polarising filter 13 could have a "horizontal" polarisation axis such that light therefore is "horizontally" polarised. Accordingly, the light of the diffraction orders from the scale are similarly horizontally polarised. This embodiment also differs in that the diffraction order encoder 16" comprises one or more waveplates, instead polarising filters. For example, the diffraction order encoder 16" comprises a half-wave plate 16a" arranged so as to coincide with the 0th diffraction order spot 250a, and non-polarisation-altering transparent regions 16b and 16c arranged so as to coincide with the 0th diffraction order spot 250a. Accordingly, subsequent to the diffraction order encoder 16", the polarisation orientation of the 0th diffraction order light is rotated by 90° such that it becomes "vertically" polarised, whereas the polarisation orientation of the +/-1st diffraction order light is unchanged (and therefore the polarisation orientation of the 0th diffraction order is orthogonal to that of the +/-1st diffraction orders). Accordingly, similar to the embodiment of Figure 9, the 0th and the +/-1st diffraction orders can be selectively filtered out as desired. In particular, the 0th diffraction order is selectively filtered out by the primary-sensor filter 22 (which comprises a polarising filter having a horizontal polarisation axis) so as to prevent it from contributing to the optical signal falling on the incremental sensor, and the secondary-sensor filter 23 comprises a polarising filter having a vertical polarisation axis such that the +/-1st diffraction orders are selectively filtered out so as to prevent them from contributing to the optical signal falling on the reference mark sensor 20'. As will be understood, in an alternative embodiment, the diffraction order encoder 16" could comprise half-wave plates (16b, 16c) arranged so as to coincide with the +/-1st diffraction order spots 250b, 250c, and a non-polarisation-altering transparent region (16a") could be arranged so as to coincide with the 0th diffraction order spot 250a. In a further alternative embodiment, the scale could polarise the light instead of using a polarising filter 13 inside the readhead (e.g. the scale 4 could be coated with a polarising film).

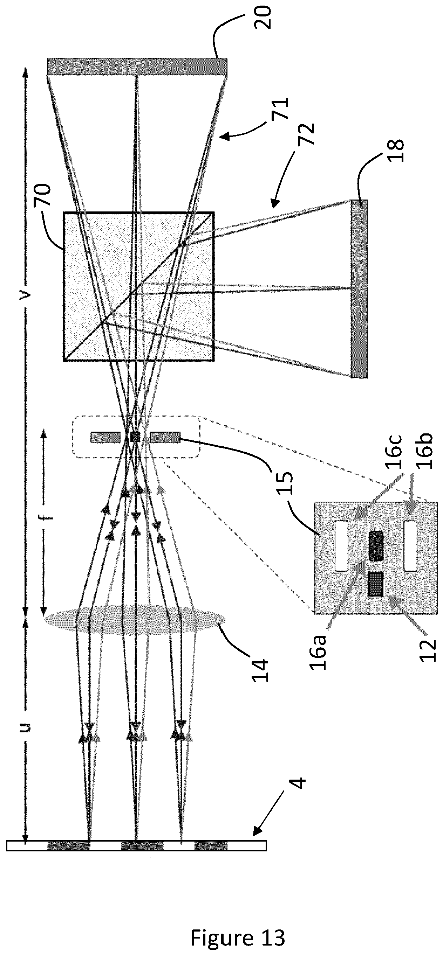

As will be understood, the use of a polarised source light and waveplates could be used in other embodiments, such as those described above in connection with Figures 3 and 9, or below in connection with Figures 13 to 15.

The above-described embodiments utilise polarising filters placed directly in front of the incremental 18 and reference mark 20/20' sensors. Figure 13 illustrates an embodiment which is substantially identical to that of Figure 3 described above, except that the primary-sensor filter 22 has been replaced with a polarising beam splitter 70, which splits the light from the diffraction order encoder 16 into two beams of orthogonal polarisation states. In particular, the polarising beam splitter 70 allows (predominantly) only vertically polarised to pass straight through it towards the reference mark sensor 20, and allows (predominantly) only horizontally polarised light to be deflected towards the incremental sensor 18. As a result, the 0th diffraction (which has been vertically polarised by the first polarising filter 16a of the diffraction order encoder 16) does not (substantially) contribute to the signal formed at the incremental sensor 18 (because it has been substantially blocked by the polarising beam splitter 70), whereas both the 0th and +/-1st diffraction orders contribute to the signal formed at the reference mark sensor 20. As will be understood, the polarising beam splitter 70 could be used instead of the primary and secondary sensor filters of the other embodiments described herein. Additionally, the precise location of the polarising beam splitter is not crucial so long as it is disposed between the diffraction order encoder 16 and the detector plane(s). It may accordingly be advantageous in some applications to dispose the diffraction order encoder substrate on the front face of the polarising beam splitter, and/or the detectors 18, 20 on the exit faces.

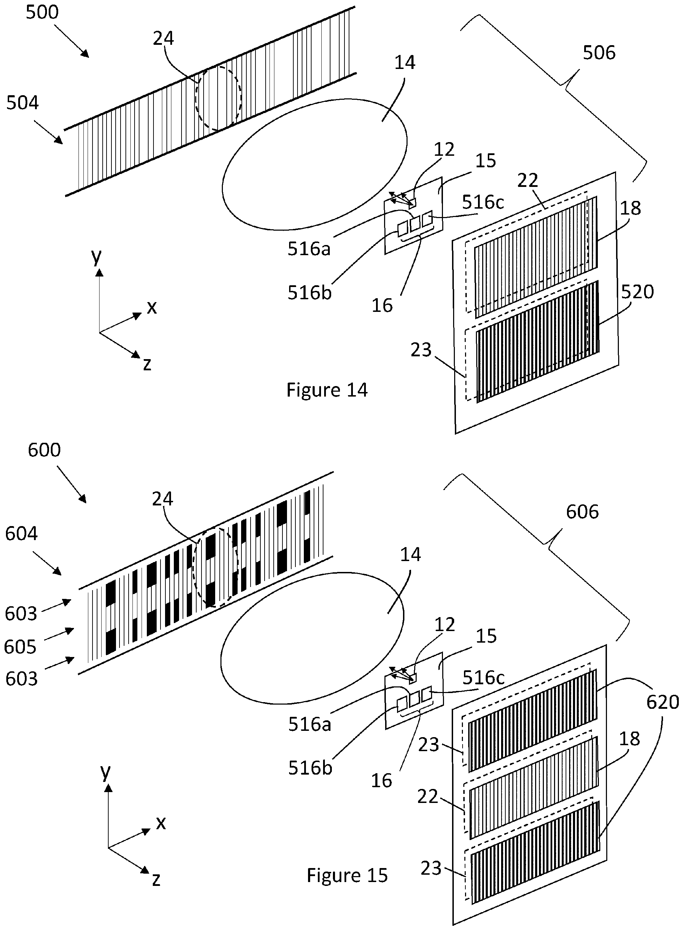

The embodiments described so far have been in connection with incremental encoders, comprising an incremental scale with (or optionally without) one or more reference marks. The invention can also be used with absolute encoders comprising absolute scale, such that those depicted in Figures 14 and 15. In the embodiment of Figure 14, the absolute scale 504 comprises features arranged notionally periodically, but wherein select features have been removed to encode unique/absolute position data along the measuring length of the scale. The data can be in the form of, for instance, a pseudorandom sequence or discrete codewords. Details of such a scale are described in more detail in US7499827 and US5279044. The readhead 506 (the body of which is omitted for the sake of clarity) shares some parts which are the same as those described above in connection with the other embodiments of the invention, and therefore like parts share the same reference numeral. For instance, the readhead 506 comprises a light source 12 (in this embodiment an unpolarised LED light source), a lens 14, diffraction order encoder 16, incremental detector 18 and primary-sensor filter 22, which are configured and arranged in the same manner as that described above in connection with the embodiments of Figures 3 to 12. Accordingly, the 0th order is blocked such that it does not contribute to forming the signal detected by the incremental sensor 18. As with the other embodiments, the primary-sensor filter 22 comprises a polarising filter having a polarisation axis which is perpendicular to the polarisation axis of the first polarising filter 516a of the diffraction order encoder 16. In particular, in this embodiment, the first polarising filter 516a has a vertical polarisation axis and the primary-sensor filter 22 has a horizontal polarisation axis.

In this embodiment, the readhead 506 further comprises an absolute sensor 520, which comprises a photodiode array (in this embodiment a one-dimensional photodiode array, but it could be two-dimensional), on which an image (or "pseudo-image" - see above) falls. As is known, and for example described in US7499827, US5279044 and US 10989567, an image of the scale can be processed in order to extract the absolute/unique code so as to thereby determine an absolute position. The absolute position can be combined with the incremental position determined from the incremental detector 18 to provide a fine-pitch absolute position. Optionally, once the absolute position has been determined, subsequent positions can be determined solely by monitoring the output from the incremental detector 18.

Similar to the reference mark embodiments described above, it can be beneficial to allow the 0th order to contribute to the signal falling on the absolute sensor. Furthermore, similar to the reference mark embodiments described above it can be beneficial to prevent the +/-1st diffraction orders from contributing to the signal falling on the absolute sensor 520. Accordingly, a secondary-sensor filter 23 can be provided in front of the absolute sensor 520 which has a polarisation axis orthogonal to the polarisation axes of the second 516b and third 516c polarising filters of the diffraction order encoder 16. In particular, in this embodiment, the second 516b and third 516c polarising filters have a horizontal polarisation axis and the secondary-sensor filter 23 has a vertical polarisation axis.

Figure 15 illustrates another embodiment of an absolute encoder 600 comprising an absolute scale 604, which is substantially identical to that described above in connection with Figure 14 (and like part share the same reference numeral), except that in this embodiment, the scale comprises a multi-track arrangement wherein absolute code features are provided in absolute scale tracks 603 provided either side of a pure incremental track 605. As shown, the absolute scale tracks 603 also comprise the finer pitch/period incremental features in the spaces between the coarser pitch/period features of the absolute scale tracks 603. As an example, the coarse features of the absolute scale tracks which encode the absolute position information could have a nominal period of approximately 32$\mu$m and the finer pitch/period incremental features can have a period of approximately 8$\mu$m. As a result, there are effectively two sets of diffraction orders produced; a first set of diffraction orders which are produced by the first series of position features (e.g. the 8$\mu$m incremental scale features) and a second set of diffraction orders produced by the second series of position features (e.g. the absolute scale features). As it happens, in this embodiment, the $0^{th}$ diffraction order of the first set of diffraction orders passes through the first polarising filter 516a of the diffraction order encoder 16 and the +/-$1^{st}$ diffraction order of the first set of diffraction orders passes through the second 516b and third 516c polarising filters, whereas the $0^{th}$ and the +/-$1^{st}$ diffraction orders of the second set of diffraction orders all pass through the first polarising filter 516a of the diffraction order encoder 16. The higher diffraction orders of the first set of diffraction orders (e.g. the +/-$3^{rd}$, +/-$5^{th}$ diffraction orders are blocked by the opaque substrate 15. The +/-$3^{rd}$ diffraction orders of the second set of diffraction orders pass through the second 516b and third 516c polarising filters of the diffraction order encoder 16. Diffraction orders greater than the +/-$3^{rd}$ of the second set of diffraction orders have substantially insignificant power, but what does exist of them will be blocked by the opaque substrate 15. As will be understood, which diffraction orders go through which filter is system dependent and can depend on various factors, including the size and/or position of the polarising filters.

As shown, the sensor arrangement of the embodiment of Figure 15 is slightly different to that of Figure 14 in that (similar to the embodiments of Figure 9 and 12) the absolute sensor 620 readhead is split into two with the incremental sensor 22 located therebetween. A variation of the embodiment of Figure 15 is that the absolute scale features extend fully across the incremental scale features (i.e. such that there isn't the track 605 of pure incremental scale between two absolute tracks 603). Rather, the absolute scale features can be fully embedded across the entire incremental features like that of Figure 14. In this case, the above comments regarding the two set of diffraction orders still apply due to the incremental and absolute position features having different nominal periods in this embodiment. If desired, in alternative configuration, the incremental sensor 18 and absolute sensor 620 can be arranged as per the embodiment of Figure 14 (i.e. two sensors side-by-side).

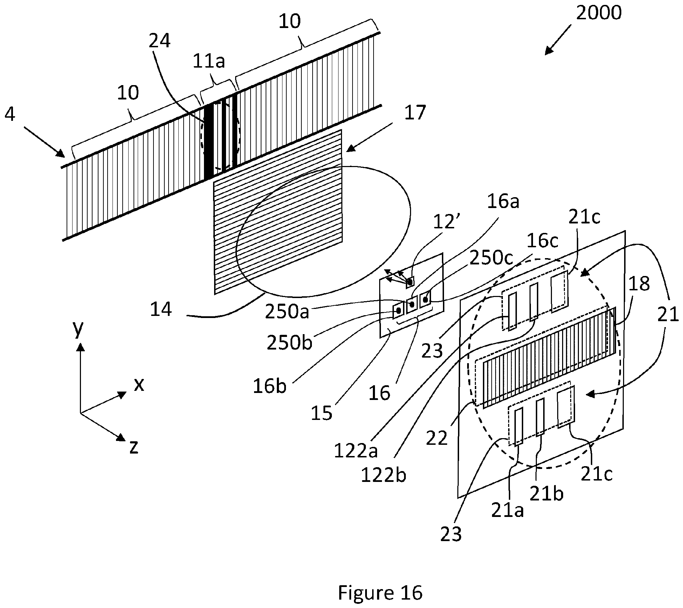

Referring now to Figure 16, another embodiment of an encoder apparatus 2000 according to the present invention is shown. This embodiment is similar to that shown in, and described above in connection with, Figures 3, 9 and 12, and like parts share like reference numerals. In this embodiment, the light source 12' comprises a laser light source, in particular a Vertical Cavity Surface-Emitting Laser (VCSEL) light source. Laser light sources, for example a VCSEL, can provide optical power advantages over non-laser light sources such as an LED, which can in turn provide improved optical signals at the readhead's sensor(s), for instance optical signals with reduced noise, and therefore help to provide improved position measurement signals (e.g. position measurement signals with less jitter). As will be understood by a person skilled in the art, a laser light source, and for instance a VCSEL, emits polarised light. However, the inventors identified that despite the VCSEL emitting polarised light (which is what the LED and polarisation filter configuration of Figure 12 provides) simply replacing the light source 12 of the encoder apparatus of Figure 12 with a VCSEL would not provide a satisfactory workable encoder apparatus. This is because the orientation of the polarisation axis of the light emitted from the VCSEL is different from one VCSEL to another, and also because the orientation of the polarisation axis of the light emitted from the VCSEL is affected by external influences such as temperature and applied current (which could change due to servoing) and therefore varies during operation of the encoder. Accordingly, if a VCSEL were simply used in place of the LED 12 and the polarising filter 13 of Figure 12, the polarisation orientation of the light hitting the waveplate(s) of the diffraction order encoder 16' is unknown and/or also changes with time, which would result in a potentially unbalanced and/or varying intensity of light falling on the incremental 18 and reference mark 20' sensors. This problem could be reduced/overcome by placing a polarisation manipulator, such as an optical retarder element 17, in the path between the light source and the diffraction order encoder 16, which is configured to reduce the degree of polarisation of the light passing through it.

As will be understood, the "degree of polarisation" (or "DOP" as it will sometimes be referred to herein) of light is a simple metric which quantifies how polarised the light is. Completely unpolarised light has a DOP of 0 (or 0%) while completely polarised light has a DOP of 1 (or 100%). The DOP of light can easily be measured experimentally as will now be described. The light is passed through a linear polariser and the outgoing light that has passed through the linear polariser falls on a photodetector. The linear polariser is rotated through 180 degrees, and the optical power observed at the photodetector is measured. The optical power at the photodetector will vary with a sinusoidal pattern if the light has polarisation. The modulation of this sinusoid reveals the DOP. Accordingly:

$$DOP = \frac{max\ power - min\ power}{max\ power + min\ power}$$

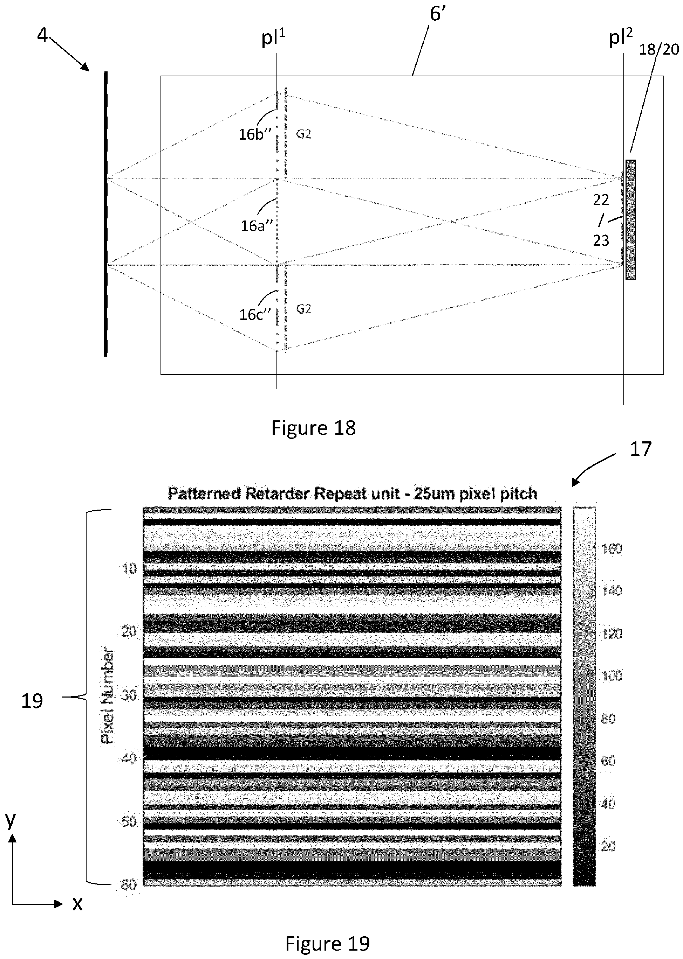

A suitable optical retarder element can comprise a half-waveplate having a non-uniform fast axis along at least one dimension. An example optical retarder element 17 is illustrated in more detail in Figure 19. In this embodiment, the optical retarder element 17 comprises a non-uniform fast axis along the Y-dimension, which is orthogonal to the encoder's measuring dimension (X), and therefore could be described as being a "non-uniform retarder" or "patterned retarder". As will be understood, the use of the terms "pattern" and "patterned" in this document, especially in connection with the polarisation manipulator, is not intended to imply that the presence of any sort of repeating configuration. Rather, the terms "pattern" and "patterned" are used to confer that the polarisation manipulator, e.g. the retarder, has a non-uniform design/form. Of course, it is possible that the design/form/pattern of the polarisation manipulator (e.g. the) retarder does repeat, but this is not necessarily the case, and it can be preferred that it does not repeat.

In particular, the optical retarder element 17 comprises an array of discrete elongated half-waveplate pixels/rows 19, wherein the array extends in the Y-dimension, and the elongated length of the pixels/rows extends in the X-dimension. Accordingly, the array/series of pixels extends perpendicular to the measuring dimension (X) of the scale 4. Accordingly, in this embodiment the non-uniform/patterned retarder 17 does not comprise any structure in the measuring (X) dimension. This can be advantageous so as to prevent the non-uniform/patterned retarder 17 being a source of diffraction of light in the X-dimension, which could otherwise adversely interfere with the generation of the optical signal at the sensors 18, 21. However, as will be understood, in other embodiments/applications, such diffraction might be tolerable and therefore the patterned retarder could comprise structure in the X-dimension, e.g. it could be arranged such that the array/series of retarder pixels extends along the Y-dimension, or the patterned retarder could comprise a two dimensional array of retarder pixels. The below table lists the fast axis orientations for each of the sixty pixels that make up the non-uniform/patterned retarder 17:

| Pixel # | Fast axis orientation (degrees) relative to horizontal axis | Pixel # | Fast axis orientation (degrees) relative to horizontal axis |
|---|---|---|---|
| 1 | 70 | 31 | 6 |
| 2 | 173 | 32 | 51 |
| 3 | 4 | 33 | 152 |
| 4 | 171 | 34 | 178 |
| 5 | 164 | 35 | 66 |
| 6 | 168 | 36 | 144 |
| 7 | 136 | 37 | 57 |
| 8 | 10 | 38 | 42 |
| 9 | 39 | 39 | 2 |
| 10 | 159 | 40 | 3 |
| 11 | 12 | 41 | 169 |
| 12 | 151 | 42 | 158 |
| 13 | 7 | 43 | 11 |
| 14 | 77 | 44 | 103 |
| 15 | 161 | 45 | 57 |
| 16 | 173 | 46 | 166 |
| 17 | 177 | 47 | 159 |
| 18 | 52 | 48 | 36 |
| 19 | 26 | 49 | 169 |
| 20 | 32 | 50 | 77 |
| 21 | 168 | 51 | 1 |
| 22 | 165 | 52 | 179 |
| 23 | 51 | 53 | 57 |
| 24 | 13 | 54 | 168 |

(continued)

| Pixel # | Fast axis orientation (degrees) relative to horizontal axis | Pixel # | Fast axis orientation (degrees) relative to horizontal axis |
|---|---|---|---|
| 25 | 179 | 55 | 73 |
| 26 | 92 | 56 | 88 |
| 27 | 120 | 57 | 2 |
| 28 | 176 | 58 | 3 |
| 29 | 111 | 59 | 7 |
| 30 | 145 | 60 | 132 |

Accordingly, as shown, in this embodiment, the non-uniform/patterned retarder 17 comprises a plurality of (in this embodiment, sixty) half-waveplate pixels 19 having more than two different fast-axes orientations, and they are not arranged periodically.

As will be understood, in other embodiments (for example in embodiments in which the scale has a relatively coarse pitch, e.g. 20$\mu$m or above) it might not be preferable or substantially beneficial to the block the 0th order from reaching the primary (e.g. incremental) sensor, however it might still be beneficial to block one or more diffraction orders from reaching the secondary (e.g. reference mark or absolute) sensor(s). Accordingly, in those cases, and in contrast to the other embodiments described above, the primary-sensor filter 22 could be omitted, such that the 0th and +/-1st diffraction orders can fall on the primary (e.g. incremental) sensor whilst the secondary-sensor filter 23 could be provided so as to block the +/-1st diffraction orders (with the higher diffraction orders being blocked by the opaque substrate 15) from reaching the secondary (e.g. reference mark or absolute) sensor(s). In such a case, it could be that the diffraction order encoder is configured such that the 0th diffraction order is not polarised at all, but this would result in an imbalance of the optical power of the 0th and +/-1st diffraction orders falling on the incremental sensor. Accordingly, the polarisation axes of the diffraction order encoder 16 and the primary 22 and secondary 23 sensor filters can selected such that no +/-1st diffraction orders reach the secondary, e.g. reference mark/absolute, sensor(s) but equal amounts of 0th and +/-1st diffraction orders reach the primary, e.g. incremental, sensor. This could be achieved for instance by configuring the diffraction order encoder 16 such that the 0th diffraction order is encoded with a polarisation orientation of 0° and the +/-1st diffraction orders are encoded with a polarisation orientation of 45°, and configuring the primary-sensor filter 22 with a polarisation axis of 22.5° (thereby equal amounts of 0th diffraction order and +/-1st diffraction order reach the primary, e.g. incremental, sensor) and configuring the secondary-sensor filter 23 with a polarisation axis of 315° such that its polarisation axis is orthogonal to the polarisation axis of the +/-1st diffraction orders, thereby preventing the +/-1st diffraction orders from reaching the secondary, e.g. reference/absolute, sensor(s)

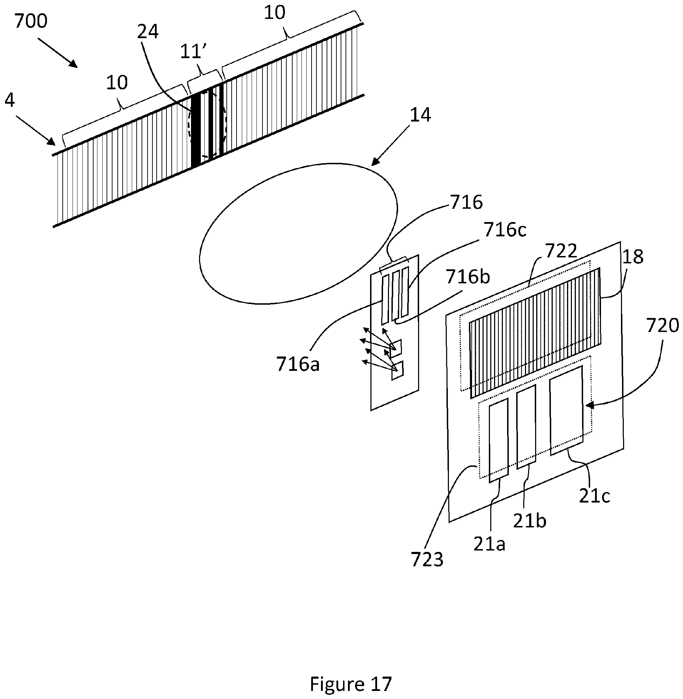

All of the above-described embodiments rely on polarisation to encode different diffraction orders with different optical states. However, this need not necessarily be the case. For example, different diffraction orders could be encoded with different wavelengths. Figure 17 illustrates such an embodiment. The encoder 700 of this embodiment shares many of the same parts as the above-described embodiments, and like parts share the same reference numeral. Instead of the single LED 12 of the above-described embodiments, this embodiment comprises a red LED 612 and a blue LED 613, the light from which is collimated by the lens 14 and illuminate a footprint 24 on the scale 4. In this embodiment, the diffraction order encoder 716, and the primary 722 and secondary 723 sensor filters, comprise wavelength (e.g. coloured) filters as opposed to polarising filters in order to selectively control which diffraction orders do/do not contribute to the signals formed at the respective incremental sensor 18 and reference mark sensor 720. In particular, regarding the diffraction order encoder 716, the first wavelength filter 716a comprises a blue filter which encodes 0th order with blue wavelengths only, and the second 716b and third 716c the wavelength filters comprise a red filter which encodes the +/-1st diffraction orders with red wavelengths only. Accordingly, in order to prevent the 0th diffraction order from contributing to the signal formed at the incremental sensor 18, the primary sensor filter 722 comprises a red wavelength filter to allow only light having red wavelengths through. Similarly, in order to prevent the +/-1st diffraction order from contributing to the signal formed at the reference mark sensor 720, the secondary sensor filter 723 comprises a blue wavelength filter to allow only light having blue wavelengths through. As described above in connection with the other embodiments, if desired, the primary 722 or the secondary 723 sensor filter could be omitted. As will be understood, although in this example red and blue wavelengths are used, it is possible to use other wavelengths. Also, it is possible to use a single, polychromatic light source instead of two different monochromatic light sources.

As will be understood, other types of sensor could be used instead of the above described electrograting. For example, in embodiments in which modulated spots are created by the readhead's optical system instead of an interference fringe pattern, bulk sensor photodiodes could be used to detect the intensity of the modulated spots, e.g. as described in US4776701.

In the above-described embodiments, the $0^{th}$ diffraction order is (substantially) completely blocked from reaching the incremental 18 and/or the +/-$1^{st}$ diffraction order is completely blocked from reaching the reference mark sensor 20/20'. This need not necessarily be the case. For instance, depending on the particular apparatus configuration, and/or the desired performance enhancement, sufficient benefit might be had from merely partially attenuating the $0^{th}$ and/or +/-$1^{st}$ diffraction orders rather than completely blocking it/them, e.g. by at least 50%, although it is preferable that the $0^{th}$ order is attenuated by at least 90%, for example by at least 95%, for instance by at least 98%. Such partial blocking/attenuation could be achieved by appropriate selection of the relative orientation of the polarisation axis of the sensor filter(s) 22, 23 and the polarisation axis of the polarising filter(s) 16a, 16b, 16c of the diffraction order encoder 16 - i.e. such that they are not strictly orthogonal (or for instance, in the embodiment of Figure 17 by appropriate selection of the wavelengths filtered-out by the wavelength filters). Similar considerations apply to the +/-$1^{st}$ diffraction orders and the secondary (e.g. reference mark or absolute) sensor.

In the embodiment described above, the scale is a reflective scale. However, this need not necessarily by the case. For instance, the scale could be a transmissive scale, wherein the light source and sensors are located on opposing sides/faces of the scale.

The above-described embodiments use a filter 22, 23, 70, 722, 723 located in front of the sensor(s) to block/attenuate select diffraction orders from reaching the incremental sensor 18 and/or reference mark sensor 20, 20'. In an alternative embodiment, the apparatus could be configured such that the sensors 18, 20, 20', 720 are themselves inherently at least partially blind to one or more diffraction orders (e.g. by way of an integrated polariser on the sensor). For example, in the embodiment of Figure 3, the incremental sensor 18 could be configured such that even though the $0^{th}$ diffraction order (and optionally diffraction orders greater than the +/-$1^{st}$ diffraction order) hits the incremental sensor 18 (because the filter 22 has been removed), it does not sense the $0^{th}$ diffraction order. For example, the incremental sensor 18 could be configured to be sensitive to only a particularly oriented polarised light (e.g. "vertically" polarised light) and diffraction order encoder 16 can be configured such that the $0^{th}$ diffraction order (and optionally orders greater than the +/-$1^{st}$ diffraction order) reaching the incremental sensor 18 only (or substantially only) comprises light polarised in a different orientation (e.g. comprises "horizontally" polarised light).

The above-described embodiments use a refractive lens 14 to relay the diffraction orders toward the sensor. However, as will be understood, this need not necessarily be the case. For instance, Figure 18 schematically illustrates an optical system of an encoder apparatus comprising an incremental scale 4 and a readhead 6' according to another embodiment of the invention which does not rely on a refractive lens. In this embodiment, $0^{th}$ and +/-$1^{st}$ diffraction orders are produced from the light from the light source hitting and being reflected by the scale 4. As illustrated, the $0^{th}$ and +/-$1^{st}$ diffraction orders are spatially separate at a first plane $pl^1$. A diffraction order encoder is located at the first plane $pl^1$. The diffraction order encoder comprises a polarising filter 16a" (e.g. having a "vertical" polarisation axis) which coincides with the $0^{th}$ diffraction order so as to encode the $0^{th}$ diffraction order with a first (e.g. vertical) polarisation orientation. The diffraction order encoder further comprises and second 16b" and third 16c" polarising filters which coincide with the + and - $1^{st}$ diffraction orders. The second 16b" and third 16c" polarising filters are configured with the same orientation as each other such that the +/-$1^{st}$ diffraction orders have the same (e.g. "horizontal") polarisation orientation as each other, but different to the polarisation orientation of the $0^{th}$ diffraction order. Diffraction gratings G2 are located so as to cause the polarised +/-$1^{st}$ diffraction orders to converge. The $0^{th}$ diffraction order is not deflected. Accordingly, the $0^{th}$ diffraction order and the +/-$1^{st}$ diffraction orders meet at a plane $pl^2$ at which the incremental 18 and reference mark 20 sensors are located. As with the many of the above-described embodiments, a first polariser 22 can be located in front of the incremental sensor 18 and can be configured to filter out the $0^{th}$ diffraction order such that it doesn't reach the incremental sensor 18 and/or a second polariser 23 can be located in front of the reference mark sensor 22 and can be configured to filter out the +/-$1^{st}$ diffraction orders such that they do not reach the reference mark sensor 22. The light source is omitted from Figure 18 for the sake of clarity. As will be understood, a separate refractive lens or a grating can be used to collimate light from the light source toward the scale, if desired or necessary.

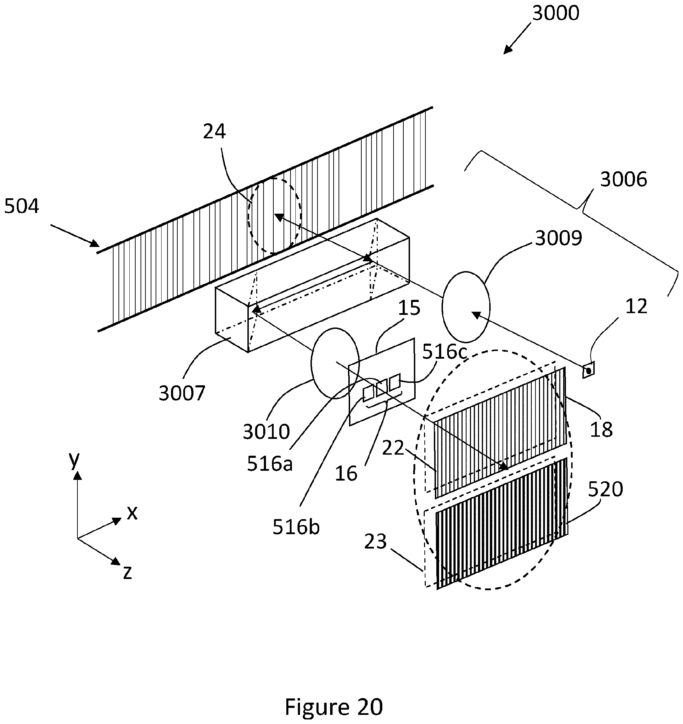

Many of the embodiments described above use a single-lens system through which the light from the light source passes on its way toward and back from the scale. As will be understood, other optical configurations are possible, such as that schematically illustrated in Figure 20 (which also happens to illustrate an absolute encoder apparatus comprising an absolute scale). The encoder 3000 of Figure 20 is similar to that of Figure 14 (and like parts share like reference numerals) in that it comprises an absolute scale 504 which comprises features arranged notionally periodically, but wherein select features have been removed to encode unique/absolute position data along the measuring length of the scale. The data can be in the form of, for instance, a pseudorandom sequence or discrete codewords. Details of such a scale are described in more detail in US7499827 and US5279044. The readhead 3006 (the body of which is omitted for the sake of clarity) comprises a light source 12, a first lens 3009 which collimates light from the light source 12, an optical beam-splitting member 3007 which enables light from the light source 12 to pass through to the scale 504 to illuminate it and to redirect light reflected by the scale back toward the sensors 18, 520 which is configured to sense an image of the scale formed thereat by the second lens 3010.

The invention is described above in connection with linear encoder apparatus. However, the invention is equally applicable to rotary encoder apparatus, including both ring encoders (wherein the scale features are formed on the outer cylindrical surface of a ring member) and disc encoders (wherein the scale features are formed on the planar face of a disc member).

**Claims**

1.   A position measurement encoder apparatus, comprising:

a scale comprising a series of position features which are readable by a readhead, the series extending along a measuring dimension, and which diffract light into multiple diffraction orders;
a readhead comprising a light source for illuminating the scale, and first and second sensors for detecting signals produced thereat by one or more diffraction orders produced by the scale's series of position features which can be used to determine the relative position of the scale and readhead along the measuring dimension;
wherein at least one diffraction order produced by the scale's series of position features has an optical state different to that of at least one other diffraction order produced by the scale's series of position features, and configured such that, by way of the optical state of the diffraction orders, the signal sensed by the first sensor is formed from a diffraction order composition that is different to that of the signal sensed by the second sensor.

2.   An apparatus as claimed in claim 1, in which the $0^{th}$ diffraction order has a different optical state to the optical state of the +/-$1^{st}$ diffraction orders.

3.   An apparatus as claimed in any preceding claim, comprising a first-sensor filter configured to filter light based on its optical state before it falls on the first sensor and/or a second-sensor filter configured to filter light based on its optical state before it falls on the second sensor.

4.   An apparatus as claimed in claim 3, configured such that the first-sensor filter prevents substantially all $0^{th}$ diffraction order light from reaching the first sensor.

5.   An apparatus as claimed in claim 3 or 4, configured such that the second-sensor filter prevents substantially all +/-$1^{st}$ diffraction order light from reaching the second sensor.

6.   An apparatus as claimed in any preceding claim, in which said optical state comprises a state of polarisation.

7.   An apparatus as claimed in claims 3 and 6, in which the first-sensor filter and/or second sensor-filter comprises a polarising filter.

8.   An apparatus as claimed in any of claims 1 to 5, in which said optical state comprises the wavelength of the diffraction order.

9.   An apparatus as claimed in claim 8, in which the first-sensor filter and/or the second-sensor filter comprises a wavelength filter.

10.   An apparatus as claimed in any preceding claim, in which different diffraction orders of the light relayed to the first and second sensors are configured to converge to respective different points of convergence in the optical path between the scale and the first and second sensors.

11.   An apparatus as claimed in claim 10, in which the points of convergence are located at the conjugate plane of the light source.

12.   An apparatus as claimed in any preceding claim, in which the readhead comprises a diffraction order encoder located in the path of the diffracted light relayed to the first and second sensors, which encodes the diffraction orders of the light with said different optical states.

13.   An apparatus as claimed in claim 10 or 11 and 12, in which the diffraction order encoder is located at said points of convergence such that at least one diffraction order is encoded with an optical state different to that of at least one other diffraction order.

14. An apparatus as claimed in any preceding claim, in which the first sensor comprises an incremental position sensor, configured to sense an incremental position signal.

15. An apparatus as claimed in any preceding claim, in which the second sensor comprises an absolute or reference mark sensor, configured to sense an absolute or reference mark signal.

16. An apparatus as claimed in any preceding claim, configured such that diffraction orders greater than the +/-1st diffraction orders are not sensed by the first and/or second position information sensors.

Figure 1a
(PRIOR ART)

Figure 1b

Figure 2

Figure 3

Figure 4

EP 4 390 326 A1

Figure 5

$0^{th}$ & $1^{st}$ orders present and having same optical state

$\dfrac{p^2}{\lambda}$

$0^{th}$ order filtered out completely

Fringe visibility

Rideheight change

Figure 6

$0^{th}$ & $1^{st}$ orders present but having different optical states

Figure 7

Figure 8a          Figure 8b

Figure 9

Nom. rideheight

Figure 10a

+75µm

Figure 10b

+150µm

Figure 10c

Nom. rideheight

Figure 11a

+75µm

Figure 11b

+150µm

Figure 11c

Figure 12

Figure 13

Figure 14

Figure 15

Figure 16

Figure 17

Figure 18

Figure 19

Figure 20

Europäisches
Patentamt

European
Patent Office

Office européen
des brevets

# EUROPEAN SEARCH REPORT

**Application Number**

EP 22 27 5165

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2012 216286 A1 (ZEISS CARL SMT GMBH [DE]) 4 April 2013 (2013-04-04) * paragraphs [0073], [0076]; figure 2 * ----- | 1-16 | INV. G01D5/34 G01D5/38 |

**TECHNICAL FIELDS SEARCHED (IPC)**

G01D

The present search report has been drawn up for all claims

| Place of search | Date of completion of the search | Examiner |
|---|---|---|
| Munich | 24 May 2023 | Kuchenbecker, J |

EPO FORM 1503 03.82 (P04C01)

## ANNEX TO THE EUROPEAN SEARCH REPORT
## ON EUROPEAN PATENT APPLICATION NO.

**EP 22 27 5165**

This annex lists the patent family members relating to the patent documents cited in the above-mentioned European search report.
The members are as contained in the European Patent Office EDP file on
The European Patent Office is in no way liable for these particulars which are merely given for the purpose of information.

**24-05-2023**

| Patent document cited in search report | Publication date | Patent family member(s) | Publication date |
|---|---|---|---|
| DE 102012216286 A1 | 04-04-2013 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5861953 A
- US 7659992 B
- US 7499827 B
- US 10132657 B
- US 20120072169 A
- DE 102015209716
- US 2003141441 A
- EP 0760932 A
- US 9651404 B
- US 20030141441 A
- US 5279044 A
- US 4776701 A
- US 10989567 B